# EUROPEAN PATENT APPLICATION

(11) **EP 4 261 626 A1**
(43) Date of publication of application: **18.10.2023**
(21) Application number: 23166173.7
(22) Date of filing: 31.03.2023
(51) Int. Cl.: G05B 13/04

(54) **CONTROL SYSTEM, CONTROL DEVICE, CONTROL METHOD, AND CONTROL PROGRAM**

(30) Priority: 01.04.2022 JP 2022061755
(71) Applicant: Omron Corporation, Kyoto-shi, Kyoto 600-8530 (JP)
(72) Inventor: NAMIE, Masaki, Kyoto-shi, Kyoto, 6008530 (JP)
(74) Representative: Bardehle Pagenberg Partnerschaft mbB Patentanwälte Rechtsanwälte

(57) **Abstract**

Provided are a control system, a control device, a control method, and a control program capable of performing stable control so that an offset does not occur with respect to a target value even when dead time is relatively long. A control system (100) includes a target device (20) configured to be controlled based on a control signal, a sensor (30) configured to measure a physical quantity of the target device (20), and a control device (10) configured to send the control signal to the target device (20) based on a command value and the physical quantity and perform feedback control. The control device (10) includes a calculator (14) that calculates a compensation amount of the control signal based on a set value of dead time and a model of the target device (20), The calculator (14) calculates the compensation amount including a first term based on the control signal and a second term based on the compensation amount calculated in the past, and changes a coefficient of the second term from a predetermined value to less than the predetermined value when a predetermined condition is satisfied.

## Description

### CROSS-REFERENCE TO RELATED APPLICATION

This application is based on Japanese Patent Application No. 2022-061755 filed with the Japan Patent Office on April 1, 2022, the entire contents of which are incorporated herein by reference.

### FIELD

The present invention relates to a control system, a control device, a control method, and a control program.

### BACKGROUND

In the technical field of factory automation, feedback control of a target device such as a servomotor is performed on the basis of a value measured by a sensor. Here, in a case where there is a time difference between when an input is given to the target device and when an output corresponding to the input appears, the feedback control loop is said to have dead time. For example, a dead time may occur in a case where the devices are connected by relatively low-speed wired communication or wireless communication or in a case where measurement is performed by a sensor at a tip of a conveyance device such as a belt conveyor.

In a case where the dead time is longer than a response time of the control target, the feedback control may not be appropriately performed. In this regard, for example, Japanese Patent No. 4930938 describes a remote control system that includes a communication disturbance estimation unit including a disturbance observer, and compensates for a communication delay on the basis of the estimated communication disturbance.

Furthermore, Japanese Patent No. 6213071 describes a conveyance system that reduces a compensation amount corresponding to dead time when an object reaches a specific position determined upstream in a conveyance direction from a target stop position.

However, in the configuration described in Japanese Patent No. 4930938, compensation is performed so as to obtain a feedback value (for example, a speed or a position obtained by integrating the speed) in a case where it is assumed that there is no dead time. Therefore, such control is open-loop control in which the feedback information is canceled, and a deviation (offset) may occur in a control amount (for example, a position) with respect to a target value due to an inertia modeling error.

Furthermore, in the configuration described in Japanese Patent No. 6213071, although it is possible to stop the object at the target position without offset, a stop state cannot be stably maintained in a case where dead time is relatively long, and a control amount may diverge. This problem will be described in detail later while being compared with the configuration of the present invention.

### SUMMARY

Therefore, the present invention provides a control system, a control device, a control method, and a control program capable of performing stable control so that an offset does not occur with respect to a target value even when dead time is relatively long.

A control system according to one aspect of the present invention is a control system including: a target device configured to be controlled based on a control signal; a sensor configured to measure a physical quantity of the target device; and a control device configured to send the control signal to the target device based on a command value and the physical quantity to perform feedback control, in which the control device includes a calculator configured to calculate a compensation amount of the control signal based on a set value of dead time and a model of the target device, and the calculator calculates the compensation amount including a first term based on the control signal and a second term based on the compensation amount calculated in a past, and changes a coefficient of the second term from a predetermined value to less than the predetermined value when a predetermined condition is satisfied.

According to this aspect, by changing the coefficient of the second term based on the compensation amount calculated in the past to be less than the predetermined value, the compensation according to the first term can be continued while causing the second term to converge to 0 more quickly. Therefore, even in a case where dead time is relatively long or in a case where a modeling error is included, stable control can be performed so that no offset occurs with respect to the target value.

In the above aspect, the calculator may change the coefficient of the second term from the predetermined value to less than the predetermined value when the command value reaches a target value.

According to this aspect, it is possible to prevent a control amount from being stable in a state of being deviated from the target value.

In the above aspect, the calculator may change the coefficient of the second term from the predetermined value to less than the predetermined value when the command value reaches a target value and an absolute value of the compensation amount is greater than or equal to a first reference value.

According to this aspect, even when a disturbance is applied, it is possible to prevent the command value from being stable in a state of being deviated from the target value.

In the above aspect, the calculator may change the coefficient of the second term from a value less than the predetermined value to the predetermined value when a target value is updated after changing the coefficient of the second term from the predetermined value to less than the predetermined value.

According to this aspect, even when the target value is updated, it is possible to perform control so as to follow the target value appropriately.

In the above aspect, the calculator may change the coefficient of the second term from the predetermined value to less than the predetermined value when an absolute value of a difference between the command value and the target value becomes less than or equal to a second reference value.

According to this aspect, it is possible to prevent a control amount from being stable in a state of being deviated from the target value.

In the above aspect, the calculator may change the coefficient of the second term from the predetermined value to less than the predetermined value when an elapsed time from start of control becomes greater than or equal to a third reference value.

According to this aspect, it is possible to prevent a control amount from being stable in a state of being deviated from the target value.

In the above aspect, the calculator may change the coefficient of the second term from the predetermined value to less than the predetermined value when a disturbance is applied.

According to this aspect, even when a disturbance is applied, it is possible to prevent a control amount from being stable in a state of deviating from the target value.

In the above aspect, the control device may control a position of the target device, and the calculator may calculate the compensation amount for each of the position and a speed, and change the coefficient of the second term related to each of the position and the speed from the predetermined value to less than the predetermined value when the predetermined condition is satisfied.

According to this aspect, even when dead time is relatively long or a modeling error is included, it is possible to stably control the position and the speed so as not to generate an offset with respect to the target value.

A control device according to another aspect of the present invention is a control device configured to send a control signal to a target device based on a physical quantity of the target device measured by a sensor and a command value to perform feedback control, the control device including a calculator configured to calculate a compensation amount of the control signal based on a set value of dead time and a model of the target device, in which the calculator calculates the compensation amount including a first term based on the control signal and a second term based on the compensation amount calculated in the past, and changes a coefficient of the second term from a predetermined value to less than the predetermined value when a predetermined condition is satisfied.

According to this aspect, by changing the coefficient of the second term based on the compensation amount calculated in the past to be less than the predetermined value, the compensation according to the first term can be continued while causing the second term to converge to 0 more quickly. Therefore, even in a case where dead time is relatively long or in a case where a modeling error is included, stable control can be performed so that no offset occurs with respect to the target value.

A control method according to another aspect of the present invention is a control method for performing feedback control by sending a control signal to a target device based on a physical quantity of the target device measured by a sensor and a command value, the control method including: calculating a compensation amount of the control signal based on a set value of dead time and a model of the target device, the compensation amount including a first term based on the control signal and a second term based on the compensation amount calculated in the past; and changing a coefficient of the second term from a predetermined value to less than the predetermined value when a predetermined condition is satisfied.

According to this aspect, by changing the coefficient of the second term based on the compensation amount calculated in the past to be less than the predetermined value, the compensation according to the first term can be continued while causing the second term to converge to 0 more quickly. Therefore, even in a case where dead time is relatively long or in a case where a modeling error is included, stable control can be performed so that no offset occurs with respect to the target value.

A control program according to another aspect of the present invention causes a control device configured to perform feedback control by sending a control signal to a target device based on a physical quantity of the target device measured by a sensor and a command value to execute: calculating a compensation amount of the control signal based on a set value of dead time and a model of the target device, the compensation amount including a first term based on the control signal and a second term based on the compensation amount calculated in the past; and changing a coefficient of the second term from a predetermined value to less than the predetermined value when a predetermined condition is satisfied.

According to this aspect, by changing the coefficient of the second term based on the compensation amount calculated in the past to be less than the predetermined value, the compensation according to the first term can be continued while causing the second term to converge to 0 more quickly. Therefore, even in a case where dead time is relatively long or in a case where a modeling error is included, stable control can be performed so that no offset occurs with respect to the target value.

According to the present invention, it is possible to provide a control system, a control device, a control method, and a control program capable of performing stable control such that an offset does not occur with respect to a target value even in a case where dead time is relatively long.

### BRIEF DESCRIPTION OF THE DRAWINGS

Fig. 1 is a diagram illustrating a network configuration of a control system according to an embodiment of the present invention;
Fig. 2 is a diagram illustrating functional blocks of a control device according to the embodiment;
Fig. 3 is a control block diagram of the control device according to the embodiment;
Fig. 4 is a diagram illustrating details of control blocks of the control device according to the embodiment;
Fig. 5 is a diagram illustrating a physical configuration of the control device according to the embodiment;
Fig. 6A is a diagram illustrating a command position of a first simulation example;
Fig. 6B is a diagram illustrating a disturbance of the first simulation example;
Fig. 7A is a diagram illustrating a position of a target device controlled by the control device according to the embodiment in the first simulation example;
Fig. 7B is a diagram illustrating an error between a position controlled by the control device according to the embodiment and a command position in the first simulation example;
Fig. 7C is a diagram illustrating a thrust controlled by the control device according to the embodiment in the first simulation example;
Fig. 7D is a diagram illustrating a speed compensation amount calculated by the control device according to the embodiment in the first simulation example;
Fig. 7E is a diagram illustrating a position compensation amount calculated by the control device according to the embodiment in the first simulation example;
Fig. 7F is a diagram illustrating a coefficient of a second term of a compensation amount used by the control device according to the embodiment in the first simulation example;
Fig. 8A is a diagram illustrating a position of a target device controlled by a control device according to a first comparative example in the first simulation example;
Fig. 8B is a diagram illustrating an error between a position controlled by the control device according to the first comparative example and a command position in the first simulation example;
Fig. 8C is a diagram illustrating a thrust controlled by the control device according to the first comparative example in the first simulation example;
Fig. 9A is a diagram illustrating a position of a target device controlled by a control device according to a second comparative example in the first simulation example;
Fig. 9B is a diagram illustrating an error between a position controlled by the control device according to the second comparative example and a command position in the first simulation example;
Fig. 9C is a diagram illustrating a thrust controlled by the control device according to the second comparative example in the first simulation example;
Fig. 9D is a diagram illustrating a position compensation amount calculated by the control device according to the second comparative example in the first simulation example;
Fig. 9E is a diagram illustrating a position compensation amount reduction adjustment coefficient used by the control device according to the second comparative example in the first simulation example;
Fig. 10A is a diagram illustrating a position of a target device controlled by a control device according to a third comparative example in the first simulation example;
Fig. 10B is a diagram illustrating an error between a position controlled by the control device according to the third comparative example and a command position in the first simulation example;
Fig. 10C is a diagram illustrating a thrust controlled by the control device according to the third comparative example in the first simulation example;
Fig. 10D is a diagram illustrating a speed compensation amount calculated by the control device according to the third comparative example in the first simulation example;
Fig. 10E is a diagram illustrating a position compensation amount calculated by the control device according to the third comparative example in the first simulation example;
Fig. 10F is a diagram illustrating a coefficient of a second term of a position compensation amount used by the control device according to the third comparative example in the first simulation example;
Fig. 11 is a diagram illustrating a disturbance of a second simulation example;
Fig. 12A is a diagram illustrating a position of a target device controlled by the control device according to the embodiment in the second simulation example;
Fig. 12B is a diagram illustrating an error between a position controlled by the control device according to the embodiment and a command position in the second simulation example;
Fig. 12C is a diagram illustrating a thrust controlled by the control device according to the embodiment in the second simulation example;
Fig. 12D is a diagram illustrating a speed compensation amount calculated by the control device according to the embodiment in the second simulation example;
Fig. 12E is a diagram illustrating a position compensation amount calculated by the control device according to the embodiment in the second simulation example;
Fig. 12F is a diagram illustrating a coefficient of a second term of a compensation amount used by the control device according to the embodiment in the second simulation example;
Fig. 13A is a diagram illustrating a position of a target device controlled by a control device according to the first comparative example in the second simulation example;
Fig. 13B is a diagram illustrating an error between a position controlled by the control device according to the first comparative example and a command position in the second simulation example;
Fig. 13C is a diagram illustrating a thrust controlled by the control device according to the first comparative example in the second simulation example;
Fig. 14A is a diagram illustrating a position of a target device controlled by a control device according to the second comparative example in the second simulation example;
Fig. 14B is a diagram illustrating an error between a position controlled by the control device according to the second comparative example and a command position in the second simulation example;
Fig. 14C is a diagram illustrating a thrust controlled by the control device according to the second comparative example in the second simulation example;
Fig. 14D is a diagram illustrating a position compensation amount calculated by the control device according to the second comparative example in the second simulation example;
Fig. 14E is a diagram illustrating a position compensation amount reduction adjustment coefficient used by the control device according to the second comparative example in the second simulation example;
Fig. 15A is a diagram illustrating a position of a target device controlled by the control device according to the embodiment in a third simulation example;
Fig. 15B is a diagram illustrating an error between a position controlled by the control device according to the embodiment and a command position in the third simulation example;
Fig. 15C is a diagram illustrating a thrust controlled by the control device according to the embodiment in the third simulation example;
Fig. 15D is a diagram illustrating a speed compensation amount calculated by the control device according to the embodiment in the third simulation example;
Fig. 15E is a diagram illustrating a position compensation amount calculated by the control device according to the embodiment in the third simulation example;
Fig. 15F is a diagram illustrating a coefficient of a second term of a compensation amount used by the control device according to the embodiment in the third simulation example;
Fig. 16A is a diagram illustrating a position of a target device controlled by a control device according to the first comparative example in the third simulation example;
Fig. 16B is a diagram illustrating an error between a position controlled by the control device according to the first comparative example and a command position in the third simulation example;
Fig. 16C is a diagram illustrating a thrust controlled by the control device according to the first comparative example in the third simulation example;
Fig. 17 is a diagram illustrating a disturbance of a fourth simulation example;
Fig. 18A is a diagram illustrating a position of a target device controlled by the control device according to the embodiment in the fourth simulation example;
Fig. 18B is a diagram illustrating an error between a position controlled by the control device according to the embodiment and a command position in the fourth simulation example;
Fig. 18C is a diagram illustrating a thrust controlled by the control device according to the embodiment in the fourth simulation example;
Fig. 18D is a diagram illustrating a speed compensation amount calculated by the control device according to the embodiment in the fourth simulation example;
Fig. 18E is a diagram illustrating a position compensation amount calculated by the control device according to the embodiment in the fourth simulation example;
Fig. 18F is a diagram illustrating a coefficient of a second term of a compensation amount used by the control device according to the embodiment in the fourth simulation example;
Fig. 19A is a diagram illustrating a position of a target device controlled by a control device according to the first comparative example in the fourth simulation example;
Fig. 19B is a diagram illustrating an error between a position controlled by the control device according to the first comparative example and a command position in the fourth simulation example;
Fig. 19C is a diagram illustrating a thrust controlled by the control device according to the first comparative example in the fourth simulation example; and
Fig. 20 is a flowchart of control processing executed by the control device according to the embodiment.

### DETAILED DESCRIPTION

An embodiment of the present invention will be described with reference to the accompanying drawings. Note that, in the respective drawings, components denoted by the same reference signs have the same or similar configurations.

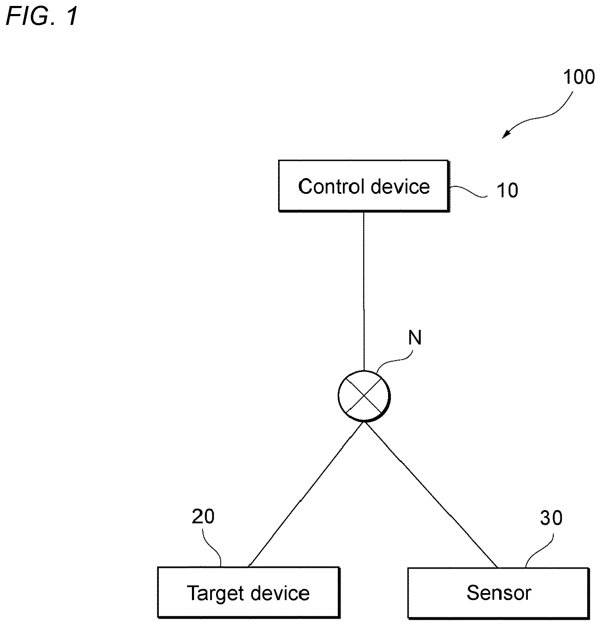

Fig. 1 is a diagram illustrating a network configuration of a control system 100 according to an embodiment of the present invention. The control system 100 includes a target device 20 that is controlled based on a control signal, a sensor 30 that measures a physical quantity of the target device 20, and a control device 10 that performs feedback control by sending a control signal to the target device 20 based on a command value and the physical quantity measured by the sensor 30.

The target device 20 may be any device that is controlled on the basis of a control signal. Hereinafter, for the sake of concrete explanation, a device that controls a position of a movable part by a servomotor is assumed. In this case, the command value is a target value related to the position of the movable part, and the control signal is a thrust (torque) of the servomotor.

The sensor 30 may measure an arbitrary physical quantity related to the target device 20. For example, in a case where the target device 20 is a device that controls the position of the movable part, the sensor 30 may measure the position of the movable part.

The control device 10, the target device 20, and the sensor 30 are communicably connected to each other by a communication network N. The communication network N may be a wired or wireless communication network, for example, a communication network conforming to a standard such as EtherNet/IP or EtherCAT (registered trademark), or a local 5G network.

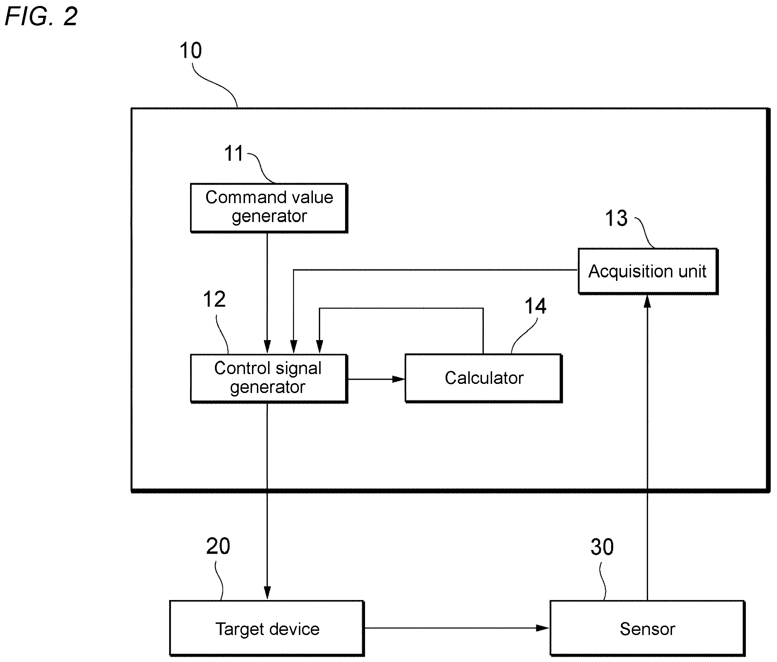

Fig. 2 is a diagram illustrating functional blocks of the control device 10 according to the embodiment. The control device 10 includes a command value generator 11, a control signal generator 12, an acquisition unit 13, and a calculator 14.

The command value generator 11 generates a command value according to set values such as a target position, a movement time, an allowable maximum speed, and an allowable maximum acceleration. In a case where a control target of the control device 10 is the position of the movable part of the target device 20, the final value of the command value is a target value regarding the position. The command value generator 11 may be a part of the configuration of the control device 10, or may be a separate component. For example, the command value generator 11 may be implemented as a functional unit of a so-called controller. In this case, the control device 10 may be a device including a so-called controller and a so-called driver (for example, a servo driver) as separate bodies.

The control signal generator 12 generates a control signal for controlling the target device 20 on the basis of the command value and the physical quantity of the target device 20 measured by the sensor 30, and transmits the control signal to the target device 20. In a case where the target device 20 is a device that controls the position of the movable part by the servomotor, the control signal may be a signal that controls the thrust (torque) of the servomotor.

The acquisition unit 13 acquires the physical quantity of the target device 20 measured by the sensor 30. The acquired physical quantity is used by the control signal generator 12.

The calculator 14 calculates a compensation amount of the control signal on the basis of a set value of dead time and a model of the target device 20. The calculator 14 calculates the compensation amount including a first term based on the control signal and a second term based on the compensation amount calculated in the past, and changes a coefficient of the second term from a predetermined value to less than the predetermined value when a predetermined condition is satisfied.

The set value of the dead time may be a value set based on an actual measurement value of the dead time or a value estimated by an arbitrary method. The model of the target device 20 is a model of an equation of motion followed by the movable part of the target device 20, and may be, for example, a model derived on the basis of an equation of motion established between thrust applied to the movable part, and an inertial force and a frictional force.

When a model value of an inertia coefficient is represented as Jm, a model value of a viscous friction coefficient is represented as Cm, Tm = Jm/Cm, Km = 1/Cm, a control cycle is represented as Ts, the number of cycles of dead time Lm is represented as Dm = round (Lm/Ts) (here, round is a function of rounding off decimals), a control signal (thrust) of the current cycle is represented as U(1), the control signal (thrust) before the dead time cycle is represented as U(1 + Dm), and a1m = exp(-Ts/Tm) and b1m = Km × (1 - a1m) are defined, the calculator 14 may calculate a speed compensation amount Vc as follows: Vc = b1m × (U(1) - U(1 + Dm)) + Adj × a1m × Vc. Here, b1m × (U(1) - U(1 + Dm)) is a first term based on the control signal, Adj × a1m × Vc is a second term based on the compensation amount calculated in the past, and Adj is a coefficient of the second term. In a case where the predetermined condition is satisfied, the calculator 14 changes the coefficient Adj of the second term from a predetermined value Adj0 to less than the predetermined value Adj 1 (Adj1 < Adj0). In a case where the predetermined condition is satisfied, for example, the calculator 14 may change the coefficient Adj of the second term from the predetermined value Adj0 = 1 to less than the predetermined value Adj1 = 0.99.

Furthermore, the calculator 14 may calculate a position compensation amount Pc by Pc = Vc × Ts + Adj × Pc. Here, Vc × Ts is a first term based on a speed compensation amount, Adj × Pc is a second term based on the compensation amount calculated in the past, and Adj is a coefficient of the second term.

By changing the coefficient of the second term based on the compensation amount calculated in the past to be less than the predetermined value, the control device 10 can continue the compensation according to the first term while causing the second term to converge to 0 more quickly. Therefore, even in a case where dead time is relatively long or a case where a modeling error is included, it is possible to perform stable control so that no offset occurs with respect to the target value.

In a case where the command value reaches the target value, the calculator 14 may change the coefficient of the second term from the predetermined value to less than the predetermined value. That is, the predetermined condition for changing the coefficient of the second term may be that the command value has reached the target value. Here, the fact that the command value reaches the target value includes not only that the command value becomes equal to the target value but also that an absolute value of a difference between the command value and the target value becomes less than or equal to a second reference value.

By changing the coefficient of the second term from the predetermined value to less than the predetermined value in a case where the command value reaches the target value, it is possible to prevent a control amount from being stable in a state of deviating from the target value.

In a case where the command value reaches the target value and an absolute value of the compensation amount is greater than or equal to a first reference value, the calculator 14 may change the coefficient of the second term from the predetermined value to less than the predetermined value. More specifically, the predetermined condition for changing the coefficient of the second term may be that the command value reaches the target value and abs(Pc) > AdjChg is satisfied. Here, abs(Pc) is an absolute value of the position compensation amount, AdjChg is the first reference value, and for example, AdjChg = 0.2 can be set.

By changing the coefficient of the second term from the predetermined value to less than the predetermined value when the command value reaches the target value and the absolute value of the compensation amount is greater than or equal to the first reference value, it is possible to prevent the control amount from being stable in a state of deviating from the target value even when disturbance is applied.

When updating the target value after changing the coefficient of the second term from the predetermined value to less than the predetermined value, the calculator 14 may change the coefficient of the second term from less than the predetermined value to the predetermined value. That is, the calculator 14 may return the coefficient of the second term to the initial value in a case where the target value is updated even after the coefficient of the second term is decreased.

By changing the coefficient of the second term from a value less than the predetermined value to the predetermined value when the target value is updated, it is possible to perform control to appropriately follow the target value even when the target value is updated.

The calculator 14 may change the coefficient of the second term from the predetermined value to less than the predetermined value in a case where an absolute value of a difference between the command value and the target value becomes less than or equal to the second reference value. More specifically, the predetermined condition for changing the coefficient of the second term may satisfy abs(r - R) ≤ Δy. Here, abs(r - R) is an absolute value of a difference between the command value r and the target value R, and Δy is the second reference value.

In a case where the absolute value of the difference between the command value and the target value is less than or equal to the second reference value, the coefficient of the second term is changed from the predetermined value to less than the predetermined value, so that it is possible to prevent the control amount from being stable in a state of deviating from the target value.

The calculator 14 may change the coefficient of the second term from the predetermined value to less than the predetermined value in a case where an elapsed time from the start of the control becomes greater than or equal to a third reference value. More specifically, the predetermined condition for changing the coefficient of the second term may be that t ≥ ΔT is satisfied. Here, t is the elapsed time from the start of the control, and ΔT is the third reference value. The third reference value ΔT may be determined based on the command value.

By changing the coefficient of the second term from the predetermined value to less than the predetermined value in a case where the elapsed time from the start of the control becomes greater than or equal to the third reference value, it is possible to prevent the control amount from being stable in a state of deviating from the target value.

In a case where disturbance is applied, the calculator 14 may change the coefficient of the second term from the predetermined value to less than the predetermined value. In a case where the timing at which the disturbance is applied is known, the calculator 14 may change the coefficient of the second term from the predetermined value to less than the predetermined value at the timing at which the disturbance is applied, may change the coefficient of the second term from the predetermined value to less than the predetermined value a predetermined time before the timing at which the disturbance is applied, or may change the coefficient of the second term from the predetermined value to less than the predetermined value a predetermined time after the timing at which the disturbance is applied. Furthermore, in a case where the timing at which the disturbance is applied is unknown, the calculator 14 may estimate the timing at which the disturbance is statistically applied and change the coefficient of the second term from the predetermined value to less than the predetermined value at the estimated timing.

By changing the coefficient of the second term from the predetermined value to less than the predetermined value when the disturbance is applied, it is possible to prevent the control amount from being stable in a state of deviating from the target value even when the disturbance is applied.

In a case where the control device 10 controls the position of the target device 20, the calculator 14 may calculate a compensation amount for each of the position and the speed of the target device 20, and in a case where a predetermined condition is satisfied, may change the coefficient of the second term regarding each of the position and the speed of the target device 20 from a predetermined value to less than a predetermined value. That is, the control device 10 may not only change the coefficient of the second term related to the position compensation amount of the target device 20 from the predetermined value to less than the predetermined value, but also change the coefficient of the second term related to the speed compensation amount from the predetermined value to less than the predetermined value.

By changing the coefficient of the second term related to each of the position and the speed of the target device 20 from the predetermined value to less than the predetermined value, it is possible to stably control the position and the speed so as not to generate an offset with respect to the target value even when dead time is relatively long or a modeling error is included.

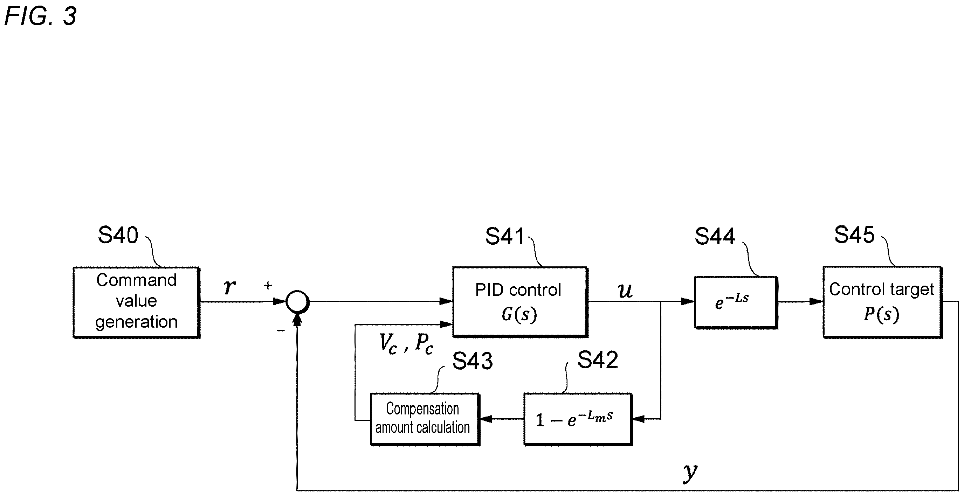

Fig. 3 is a control block diagram of the control device 10 according to the embodiment. Hereinafter, a case where the position of the movable part of the target device 20 is controlled by the control device 10 will be described. Furthermore, as a model of the motion equation followed by the movable part, a motion equation established between the thrust applied to the movable part, and the inertial force and the frictional force is considered.

First, the control device 10 generates a command value r (S40). In this example, the command value r is a value related to a position, and the final value of the command value r is a target value. The command value r is input to PID control G(s), and a control signal u representing the thrust is output (S41). Note that, although the feedforward control block is omitted in the drawing, the feedforward control block may be included as a control block, and for example, model following type two-degree-of-freedom control may be applied.

The control device 10 multiplies the control signal u by an element (1 - e^{-Lms}) related to a set value Lm of dead time (S42) and calculates the compensation amount (S43). The calculated speed compensation amount Vc and position compensation amount Pc are fed back to the PID control G(s).

Then, after a time delay e^{-Ls} occurs by the dead time L (S44), the control signal u is input to the control target P(s) (S45). Here, the control target is a part (for example, a movable part) or all of the target device 20. Note that, in a case where the dead time is a communication delay, a delay of L1 may occur in the transmission of the control signal u, and a delay of L2 may occur in the transmission of the position y, which is a physical quantity of the control target P(s). However, in this example, the dead time is collectively expressed as L = L1 + L2. In a case where the delay time does not vary with time, such replacement can be performed.

Thereafter, the position y, which is a physical quantity of the control target P(s), is read and fed back to the PID control G(s). The control device 10 performs control such that the position y follows the command value r by repeating such control at a predetermined cycle.

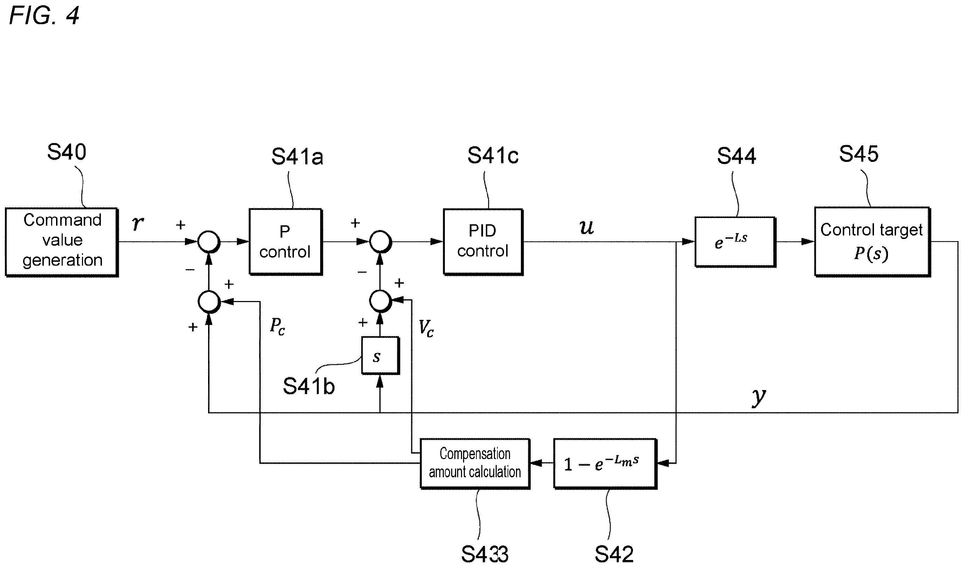

Fig. 4 is a diagram illustrating details of control blocks of the control device 10 according to the embodiment. The drawing illustrates the feedback of the compensation amount in more detail than Fig. 3.

First, the control device 10 generates a command value r (S40). The command value r is synthesized with the actually measured position y and the position compensation amount Pc, and then input to P control (S41a). Moreover, the time derivative (S41b) of the position y actually measured with respect to an output of the P control and the speed compensation amount Vc are synthesized and input to PI control, and the control signal u representing the thrust is output (S41c). Note that the feedforward control block may be included similarly to Fig. 3.

Similarly to Fig. 3, the control device 10 multiplies the control signal u by the element (1 - e^{-LmS}) related to the set value Lm of the dead time (S42) and calculates the compensation amount (S43). The calculated speed compensation amount Vc and position compensation amount Pc are fed back to the PI control and the P control, respectively.

Then, after a time delay e^{-Ls} occurs by the dead time L (S44), the control signal u is input to the control target P(s) (S45). Thereafter, the position y, which is a physical quantity of the control target P(s), is read and fed back to the PID control G(s). The control device 10 performs control such that the position y follows the command value r by repeating such control at a predetermined cycle.

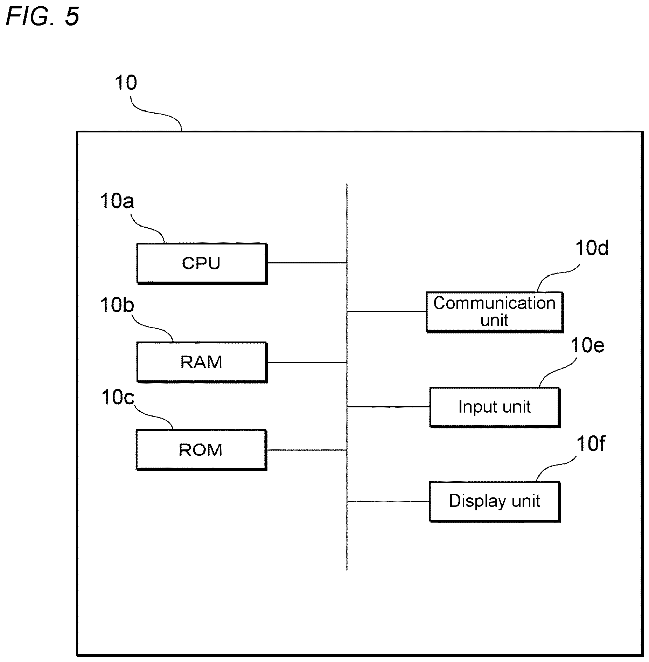

Fig. 5 is a diagram illustrating a physical configuration of the control device 10 according to the embodiment. The control device 10 includes a central processing unit (CPU) 10a corresponding to an arithmetic unit, a random access memory (RAM) 10b corresponding to a storage unit, a read only memory (ROM) 10c corresponding to a storage unit, a communication unit 10d, an input unit 10e, and a display unit 10f. These components are connected via a bus so as to be able to transmit and receive data to and from each other. Note that, in the present example, a case where the control device 10 includes one computer will be described, but the control device 10 may be realized by combining a plurality of computers. Furthermore, the configuration illustrated in Fig. 5 is an example, and the control device 10 may have a configuration other than these or may not have some of these configurations.

The CPU 10a is a control unit that performs control related to execution of a program stored in the RAM 10b or the ROM 10c, and calculation and processing of data. The CPU 10a is an arithmetic unit that executes a program (control program) for calculating the compensation amount and controlling the target device 20 based on the compensation amount. The CPU 10a receives various data from the input unit 10e and the communication unit 10d, and displays a calculation result of the data on the display unit 10f or stores the calculation result in the RAM 10b.

The RAM 10b can rewrite data in the storage unit, and may be configured by, for example, a semiconductor storage element. The RAM 10b may store data such as a program executed by the CPU 10a, an initial value used for compensation amount calculation, and a coefficient of the second term. Note that these are examples, and data other than these may be stored in the RAM 10b, or some of these may not be stored.

The ROM 10c is capable of reading data in the storage unit, and may be configured by, for example, a semiconductor storage element. The ROM 10c may store, for example, a control program and data that is not rewritten.

The communication unit 10d is an interface that connects the control device 10 to another device. The communication unit 10d may be connected to a communication network such as a LAN.

The input unit 10e receives data input from a user, and may include, for example, a keyboard and a touch panel.

The display unit 10f visually displays a calculation result by the CPU 10a, and may be configured by, for example, a liquid crystal display (LCD). The display unit 10f may display, for example, the control signal and the calculated compensation amount in time series.

The control program may be provided by being stored in a computer-readable storage medium such as the RAM 10b or the ROM 10c, or may be provided via a communication network connected by the communication unit 10d. In the control device 10, the CPU 10a executes the control program to implement various operations described with reference to Fig. 2. Note that these physical configurations are merely examples, and may not necessarily be independent configurations. For example, the control device 10 may include a large-scale integration (LSI) in which the CPU 10a, the RAM 10b, and the ROM 10c are integrated.

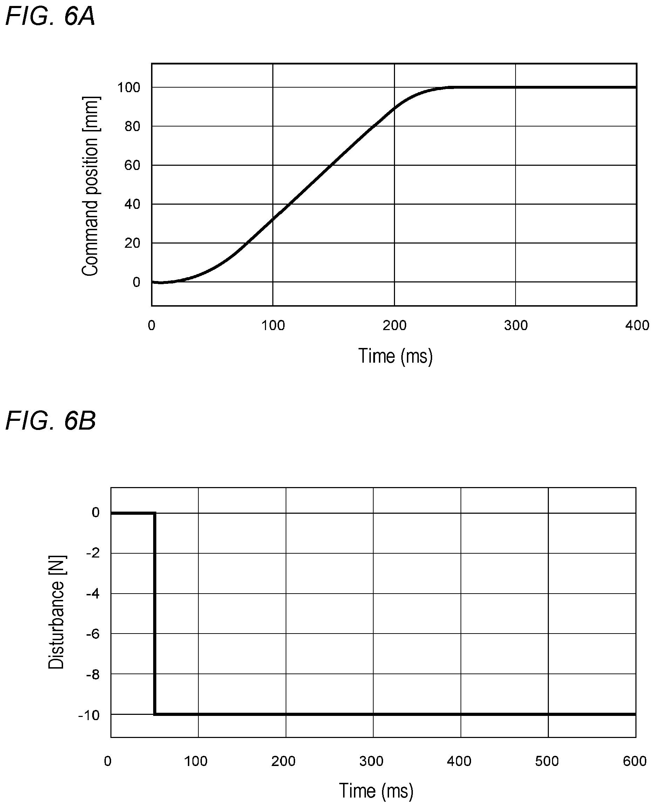

Fig. 6A is a diagram illustrating a command position of a first simulation example. In the present simulation example, a command position monotonically increases from the origin to 100 [mm] from the time 10 [ms] to 250 [ms]. The maximum acceleration during the movement is 10,000 [mm/s²].

Fig. 6B is a diagram illustrating a disturbance of the first simulation example. In the present simulation example, -10 [N] of the disturbance is added stepwise from time 50 [ms].

Other conditions of the first simulation example are as follows. An inertia mass J is 10 kg, a viscous friction coefficient C is 0 [Ns/m], a control period Ts is 0.25 [ms], and the dead time period number D is 20. It is assumed that no modeling error occurs in the present simulation example.

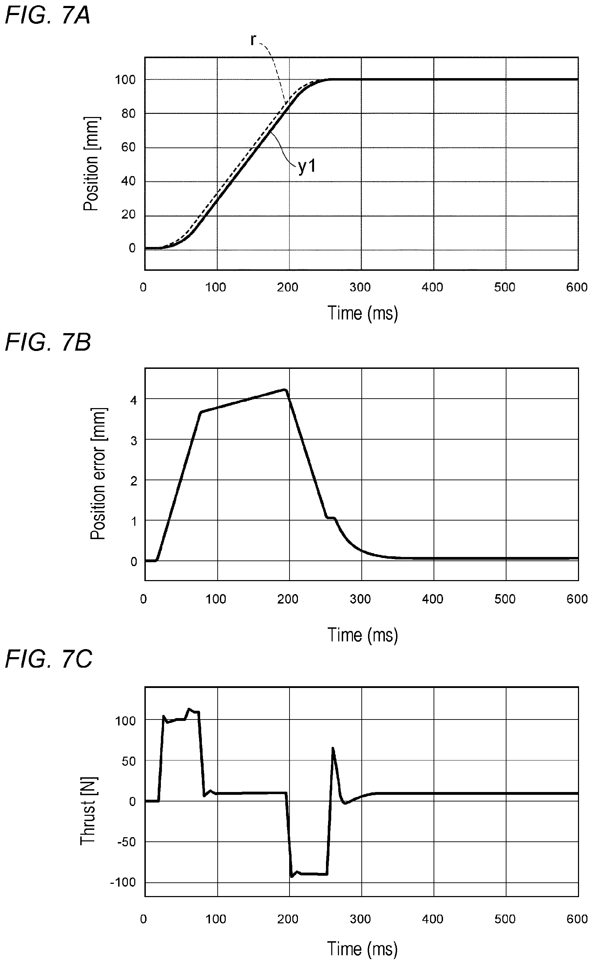

Fig. 7A is a diagram illustrating a position y1 of a target device 20 controlled by the control device 10 according to the embodiment in the first simulation example. In the drawing, the position y1 of the target device 20 controlled by the control device 10 according to the embodiment is indicated by a solid line, and a command position r is indicated by a broken line. The position y1 of the target device 20 controlled by the control device 10 according to the embodiment converges to the target value without offset after the command position r becomes constant at the target value of 100 [mm].

Fig. 7B is a diagram illustrating an error between a position controlled by the control device 10 according to the embodiment and a command position in the first simulation example. The drawing illustrates a difference between r and y1 illustrated in Fig. 7A. The error increases to about 4 [mm] while the command position changes, but rapidly converges to 0 after the command position reaches the target value and becomes constant. As described above, also from the drawing, it is confirmed that the position of the target device 20 controlled by the control device 10 according to the embodiment converges to the target value without offset.

Fig. 7C is a diagram illustrating a thrust controlled by the control device 10 according to the embodiment in the first simulation example. The thrust is a control signal transmitted from the control device 10 to the target device 20. The thrust of 10 [N] is generated after the time of 50 [ms] so as to cancel the step disturbance of -10 [N] in addition to the thrust generated with the reverse sign in a period in which the positive acceleration occurs and a period in which the negative acceleration occurs.

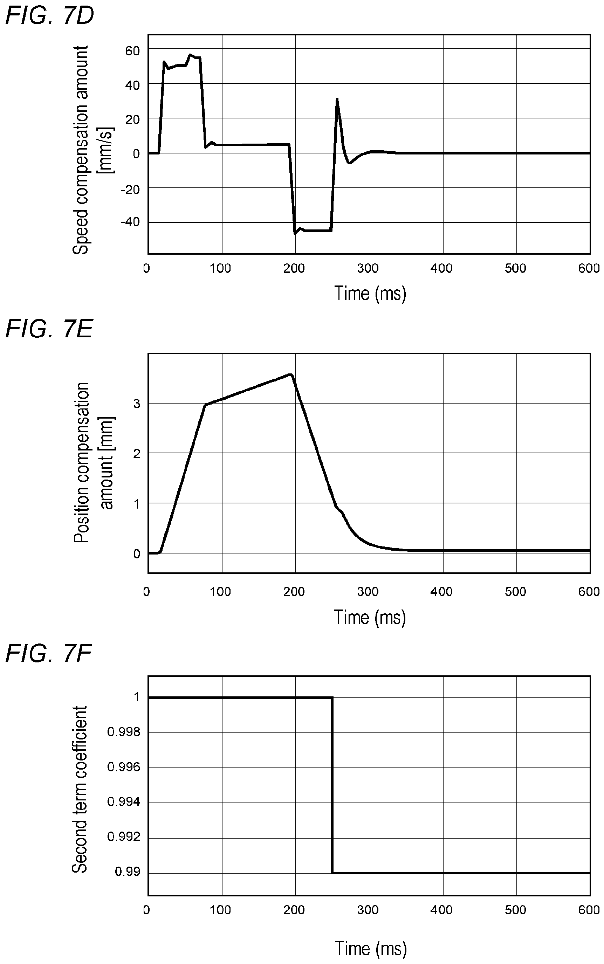

Fig. 7D is a diagram illustrating a speed compensation amount calculated by the control device 10 according to the embodiment in the first simulation example. The speed compensation amount changes in the same manner as the thrust illustrated in Fig. 7C, but converges to 0 after the coefficient of the second term of the speed compensation amount described later changes from 1 to 0.99.

Fig. 7E is a diagram illustrating a position compensation amount calculated by the control device 10 according to the embodiment in the first simulation example. The position compensation amount shifts similarly to the error illustrated in Fig. 7B, but converges to 0 after the coefficient of the second term of the position compensation amount described later changes from 1 to 0.99.

Fig. 7F is a diagram illustrating a coefficient of the second term of the compensation amount used by the control device 10 according to the embodiment in the first simulation example. The coefficient of the second term illustrated in the drawing is used for both the speed compensation amount and the position compensation amount. The coefficient of the second term of the compensation amount changes from 1 to 0.99 at the timing of 250 [ms] when the command position becomes 100 [mm] that is the target value and the position compensation amount is 0.2 [mm] or more. After the coefficient of the second term changes to 0.99, the second term of the speed compensation amount and the position compensation amount rapidly converges to 0. Furthermore, since the first terms of the speed compensation amount and the position compensation amount are proportional to a difference between the thrust of the current cycle and the thrust before the dead time cycle, the first term converges to 0 after the thrust becomes constant. In this way, the speed compensation amount and the position compensation amount become 0 after the command position becomes constant.

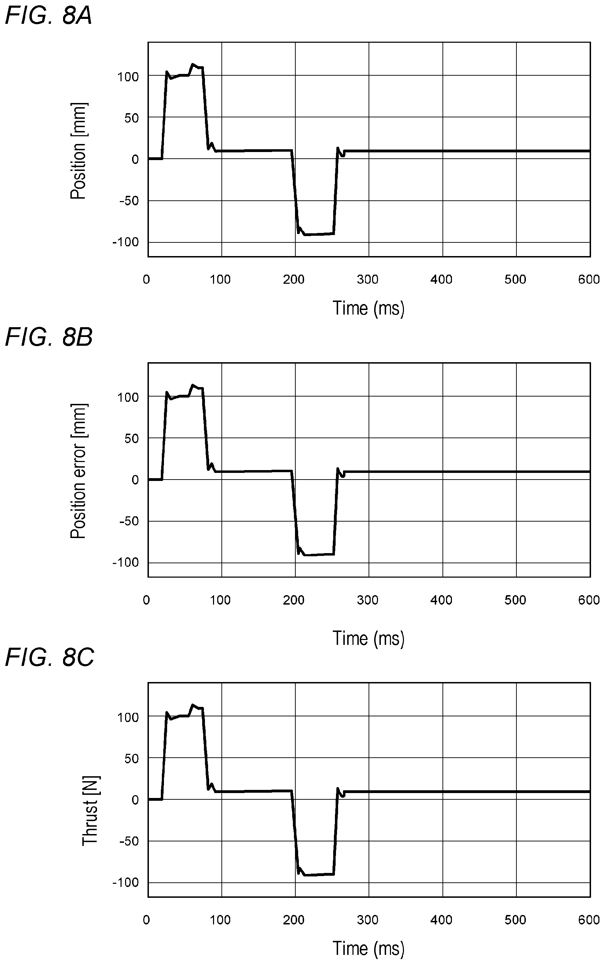

Fig. 8A is a diagram illustrating a position of a target device 20 controlled by the control device according to a first comparative example in the first simulation example. The control device according to the first comparative example is an example of controlling the position of the target device 20 using PID control and a conventional Smith compensator. In the drawing, a position y1a of the target device 20 controlled by the control device according to the first comparative example is indicated by a solid line, and a command position r is indicated by a broken line. The position y1a of the target device 20 controlled by the control device according to the first comparative example gradually decreases after 250 [ms] when the command position r becomes constant at 100 [mm] that is the target value, and does not converge to the same position as the target value.

Fig. 8B is a diagram illustrating an error between a position controlled by the control device according to the first comparative example and a command position in the first simulation example. The error starts to increase at 250 [ms] when the command position r becomes constant at 100 [mm], and diverges.

Fig. 8C is a diagram illustrating a thrust controlled by the control device according to the first comparative example in the first simulation example. The thrust of 10 [N] is generated after the time of 50 [ms] so as to cancel the step disturbance of -10 [N] in addition to the thrust generated with the reverse sign in a period in which the positive acceleration occurs and a period in which the negative acceleration occurs.

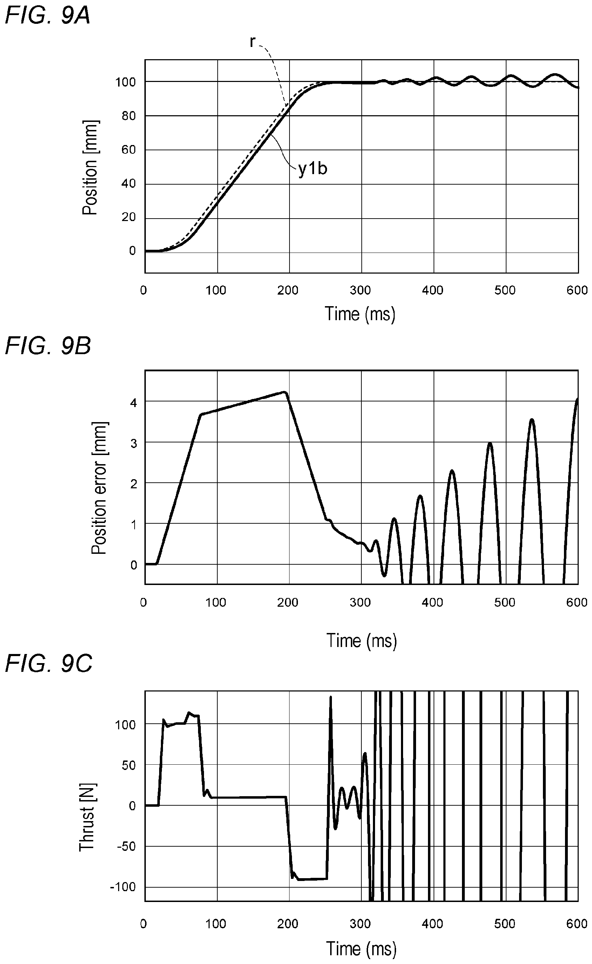

Fig. 9A is a diagram illustrating a position of a target device controlled by the control device according to a second comparative example in the first simulation example. The control device according to the second comparative example is an example of controlling the position of the target device 20 using the configuration described in Japanese Patent No. 6213071. In the drawing, a position y1b of the target device 20 controlled by the control device according to the second comparative example is indicated by a solid line, and a command position r is indicated by a broken line. The position y1b of the target device 20 controlled by the control device according to the second comparative example vibrates after 250 [ms] when the command position r becomes constant at 100 [mm] that is the target value, and the amplitude of the vibration gradually increases and does not converge to the target position.

Fig. 9B is a diagram illustrating an error between a position controlled by the control device according to the second comparative example and a command position in the first simulation example. The error vibrates after the command position r becomes constant at 100 [mm], and the amplitude of the vibration gradually expands and diverges.

Fig. 9C is a diagram illustrating a thrust controlled by the control device according to the second comparative example in the first simulation example. Although the thrust is generated with the reverse sign in a period in which the positive acceleration occurs and a period in which the negative acceleration occurs, the thrust vibrates after 250 [ms], and it can be read that the control is not appropriately performed.

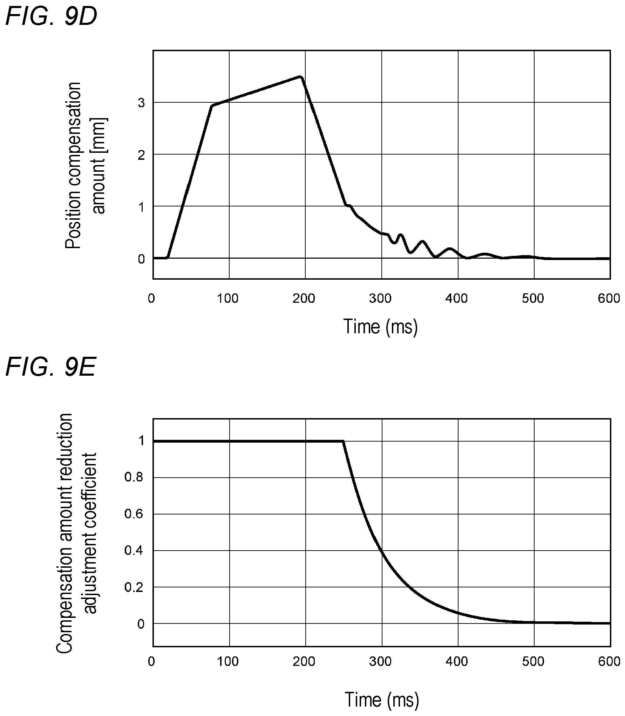

Fig. 9D is a diagram illustrating a position compensation amount calculated by the control device according to the second comparative example in the first simulation example. The position compensation amount gradually converges to 0 while oscillating after 250 [ms] when the command position r becomes constant at 100 [mm].

Fig. 9E is a diagram illustrating a position compensation amount reduction adjustment coefficient used by the control device according to the second comparative example in the first simulation example. The position compensation amount reduction adjustment coefficient changes from 1 to 0 at 250 [ms] where the command position r is constant at 100 [mm]. The position compensation amount reduction adjustment coefficient is a coefficient multiplied by the entire position compensation amount, and the decrease in the position compensation amount illustrated in Fig. 9D is realized along with the decrease in the position compensation amount reduction adjustment coefficient. However, as is clear from Figs. 9A, 9B, and 9C, in a case where there is a relatively long dead time, it is not possible to perform appropriate control even using such a position compensation amount reduction adjustment coefficient. Note that even in a case where there is no step disturbance in the first simulation example, if there is a relatively long dead time, the position of the target device 20 oscillates in the control device according to the second comparative example, and appropriate control cannot be performed.

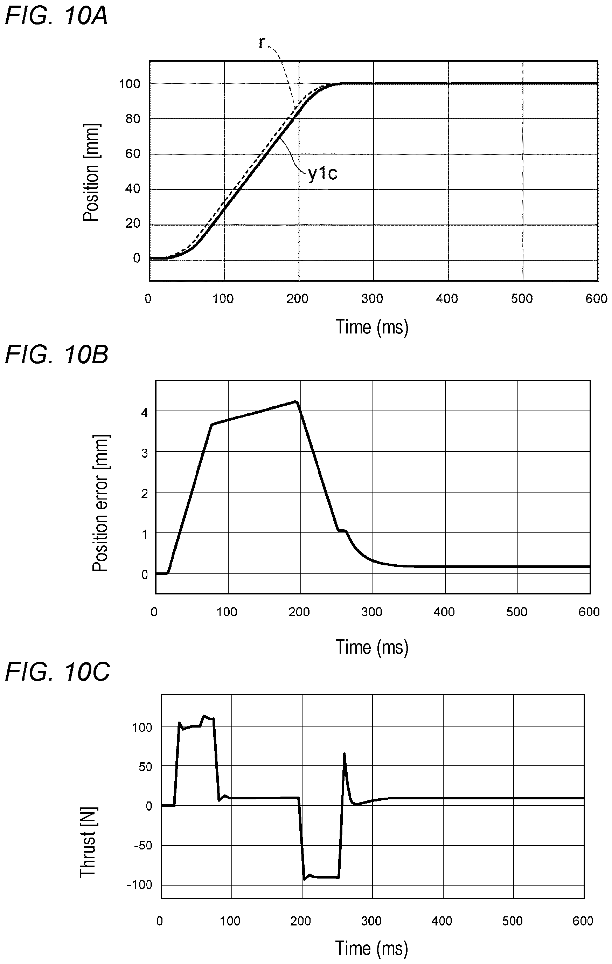

Fig. 10A is a diagram illustrating a position of a target device controlled by the control device according to a third comparative example in the first simulation example. The control device according to the third comparative example is different from the configuration of the control device 10 according to the embodiment in that the coefficient of the second term of the position compensation amount is changed from 1 to 0.99, but the coefficient of the second term of the speed compensation amount is kept at 1, but the other configurations are an example common to the configuration of the control device 10 according to the embodiment. In the drawing, a position y1c of the target device 20 controlled by the control device according to the third comparative example is indicated by a solid line, and a command position r is indicated by a broken line. The position y1c of the target device 20 controlled by the control device according to the third comparative example converges to substantially the same position after 250 [ms] when the command position r becomes constant at 100 [mm] which is the target value, but a slight deviation (offset) remains.

Fig. 10B is a diagram illustrating an error between a position controlled by the control device according to the third comparative example and a command position in the first simulation example. The error remains at a constant value even after 250 [ms] at which the command position r becomes constant at 100 [mm], and does not converge to 0.

Fig. 10C is a diagram illustrating a thrust controlled by the control device according to the third comparative example in the first simulation example. The thrust of 10 [N] is generated after the time of 50 [ms] so as to cancel the step disturbance of -10 [N] in addition to the thrust generated with the reverse sign in a period in which the positive acceleration occurs and a period in which the negative acceleration occurs.

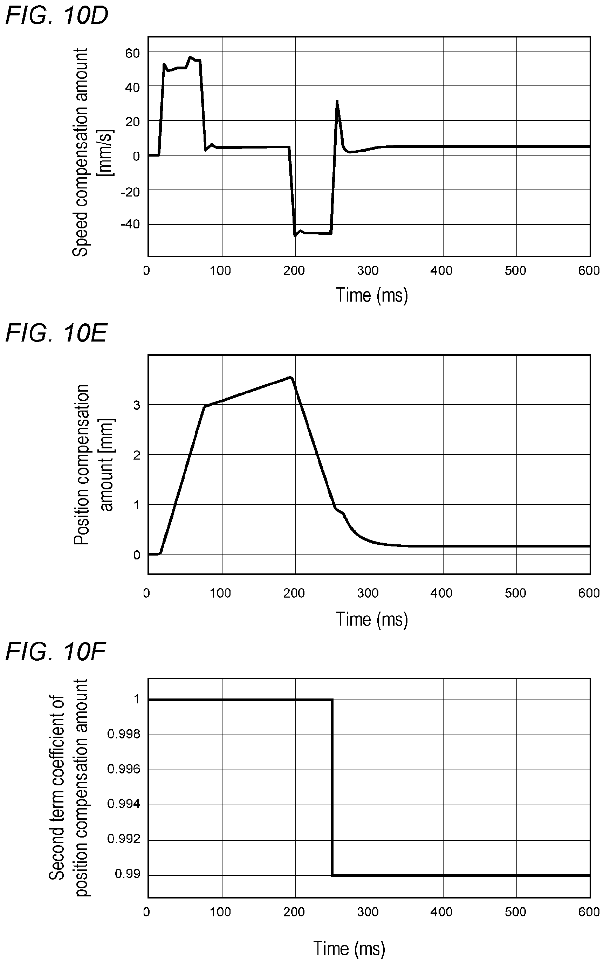

Fig. 10D is a diagram illustrating a speed compensation amount calculated by the control device according to the third comparative example in the first simulation example. The speed compensation amount transitions similarly to the thrust illustrated in Fig. 10C, but unlike the case of the control device 10 according to the embodiment illustrated in Fig. 7D, even after the coefficient of the second term of the position compensation amount changes from 1 to 0.99, the speed compensation amount does not converge to 0 and a constant value remains. This is because in the control device according to the third comparative example, since the coefficient of the second term of the speed compensation amount remains 1, the second term of the speed compensation amount does not become 0 and remains.

Fig. 10E is a diagram illustrating a position compensation amount calculated by the control device according to the third comparative example in the first simulation example. The position compensation amount shifts similarly to the error illustrated in Fig. 10B, but unlike the case of the control device 10 according to the embodiment illustrated in Fig. 7E, even after the coefficient of the second term of the position compensation amount changes from 1 to 0.99, the position compensation amount does not converge to 0 and a constant value remains.

Fig. 10F is a diagram illustrating a coefficient of the second term of the position compensation amount used by the control device according to the third comparative example in the first simulation example. The coefficient of the second term illustrated in the drawing is used for the position compensation amount and is not used for the speed compensation amount. As described above, in a case where only the coefficient of the second term of the position compensation amount is changed from the predetermined value to less than the predetermined value and the coefficient of the second term of the speed compensation amount is maintained at the predetermined value, the influence of the disturbance cannot be completely removed, and the error remains even after the command position reaches the target value and becomes constant.

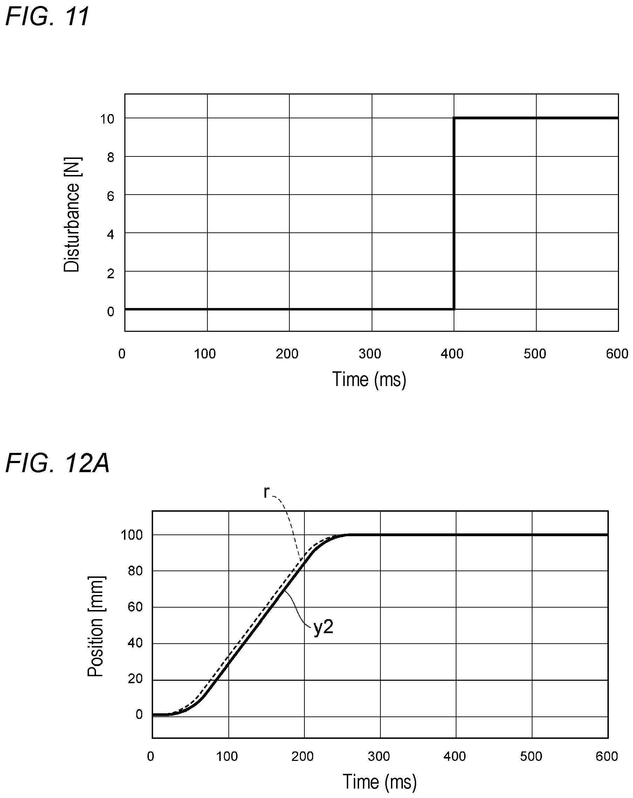

Fig. 11 is a diagram illustrating a disturbance of a second simulation example. In the present simulation example, the disturbance is added +10 [N] stepwise from the time 400 [ms]. The command position in the present simulation example is the same as that in the first simulation example. That is, in the present simulation example, the command position monotonically increases from the origin to 100 [mm] from the time 10 [ms] to 250 [ms]. The maximum acceleration during the movement is 10,000 [mm/s²]. In the present simulation example, the disturbance is applied after the command position becomes constant at 100 [mm].

Other conditions of the second simulation example are as follows. An inertia mass J is 10 kg, a viscous friction coefficient C is 0 [Ns/m], a control period Ts is 0.25 [ms], and the dead time period number D is 20. It is assumed that no modeling error occurs in the present simulation example.

Fig. 12A is a diagram illustrating a position y2 of the target device 20 controlled by the control device 10 according to the embodiment in the second simulation example. In the drawing, a position y2 of the target device 20 controlled by the control device 10 according to the embodiment is indicated by a solid line, and a command position r is indicated by a broken line. The position y2 of the target device 20 controlled by the control device 10 according to the embodiment converges to the target value without offset after the command position r becomes constant at the target value of 100 [mm].

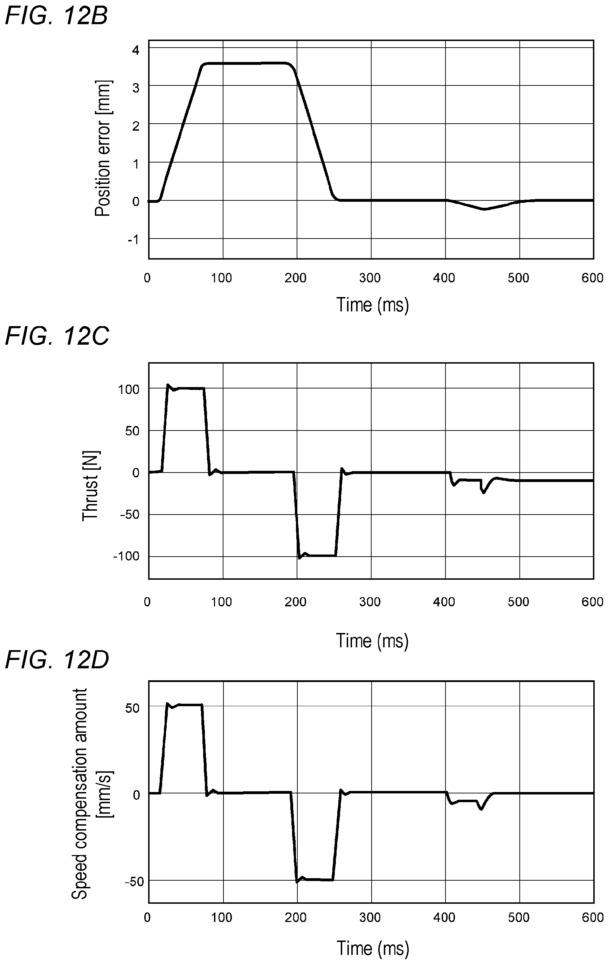

Fig. 12B is a diagram illustrating an error between a position controlled by the control device 10 according to the embodiment and a command position in the second simulation example. The drawing illustrates a difference between r and y2 illustrated in Fig. 12A. The error expands to about 3.5 [mm] while the command position changes, but rapidly converges to 0 after the command position reaches the target value and becomes constant. Furthermore, although a slight error occurs at the timing of the time 400 [ms] when the step disturbance is applied, the error quickly converges to 0. As described above, also from the drawing, it is confirmed that the position of the target device 20 controlled by the control device 10 according to the embodiment converges to the target value without offset.

Fig. 12C is a diagram illustrating a thrust controlled by the control device 10 according to the embodiment in the second simulation example. The thrust is a control signal transmitted from the control device 10 to the target device 20. The thrust of -10 [N] is generated after the time of 400 [ms] so as to cancel the step disturbance of +10 [N] in addition to the thrust generated with the reverse sign in a period in which the positive acceleration occurs and a period in which the negative acceleration occurs.

Fig. 12D is a diagram illustrating a speed compensation amount calculated by the control device 10 according to the embodiment in the second simulation example. The speed compensation amount changes in the same manner as the thrust illustrated in Fig. 12C, but converges to 0 after the coefficient of the second term of the speed compensation amount described later changes from 1 to 0.99.

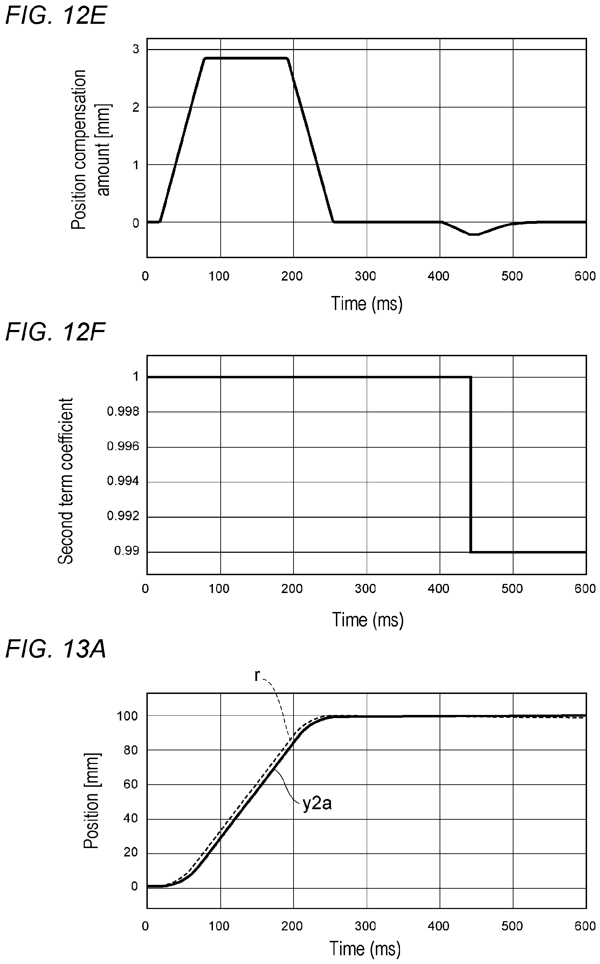

Fig. 12E is a diagram illustrating a position compensation amount calculated by the control device 10 according to the embodiment in the second simulation example. The position compensation amount shifts similarly to the error illustrated in Fig. 12B, but converges to 0 after the coefficient of the second term of the position compensation amount described later changes from 1 to 0.99.

Fig. 12F is a diagram illustrating a coefficient of the second term of the compensation amount used by the control device 10 according to the embodiment in the second simulation example. The coefficient of the second term illustrated in the drawing is used for both the speed compensation amount and the position compensation amount. The coefficient of the second term of the compensation amount changes from 1 to 0.99 at the timing when the command position becomes 100 [mm] which is the target value and the position compensation amount is generated by the step disturbance at about 450 [ms]. After the coefficient of the second term changes to 0.99, the second term of the speed compensation amount and the position compensation amount rapidly converges to 0. Furthermore, since the first terms of the speed compensation amount and the position compensation amount are proportional to a difference between the thrust of the current cycle and the thrust before the dead time cycle, the first term converges to 0 after the thrust becomes constant.

Fig. 13A is a diagram illustrating a position of a target device controlled by the control device according to the first comparative example in the second simulation example. The control device according to the first comparative example is an example of controlling the position of the target device 20 using PID control and a conventional Smith compensator. In the drawing, a position y2a of the target device 20 controlled by the control device according to the first comparative example is indicated by a solid line, and a command position r is indicated by a broken line. The position y2a of the target device 20 controlled by the control device according to the first comparative example gradually increases after 250 [ms] when the command position r becomes constant at 100 [mm] that is the target value, and does not converge to the same position as the target value.

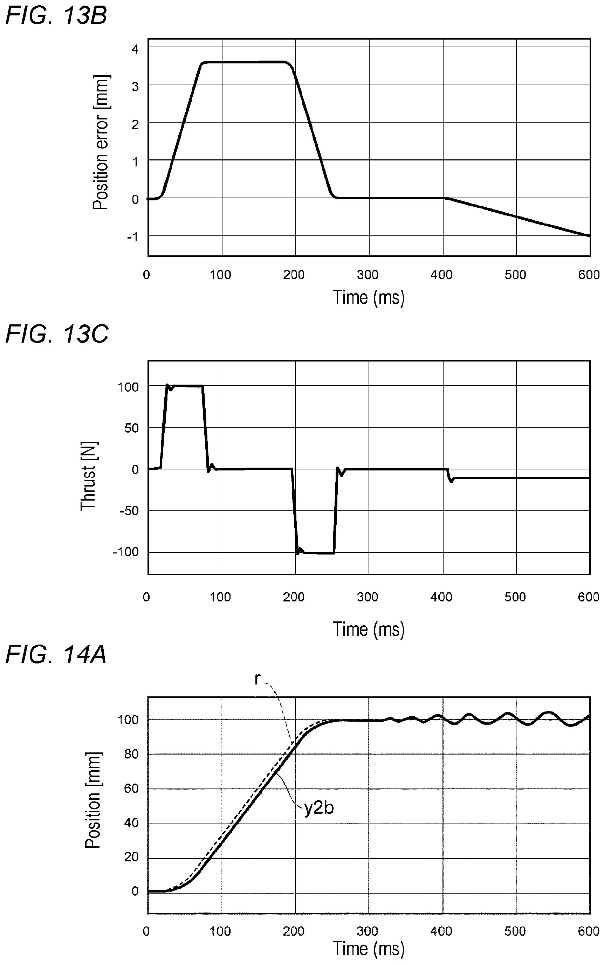

Fig. 13B is a diagram illustrating an error between a position controlled by the control device according to the first comparative example and a command position in the second simulation example. After the command position r becomes constant at 100 [mm], the error turns negative at 400 [ms] where the step disturbance is applied, and diverges.

Fig. 13C is a diagram illustrating a thrust controlled by the control device according to the first comparative example in the second simulation example. The thrust of -10 [N] is generated after the time of 400 [ms] so as to cancel the step disturbance of +10 [N] in addition to the thrust generated with the reverse sign in a period in which the positive acceleration occurs and a period in which the negative acceleration occurs.

Fig. 14A is a diagram illustrating a position of a target device controlled by the control device according to the second comparative example in the second simulation example. The control device according to the second comparative example is an example of controlling the position of the target device 20 using the configuration described in Japanese Patent No. 6213071. In the drawing, a position y2b of the target device 20 controlled by the control device according to the second comparative example is indicated by a solid line, and a command position r is indicated by a broken line. The position y2b of the target device 20 controlled by the control device according to the second comparative example vibrates before the step disturbance is applied after 250 [ms] when the command position r becomes constant at 100 [mm] which is the target value, and the amplitude of the vibration gradually increases and does not converge to the target position.

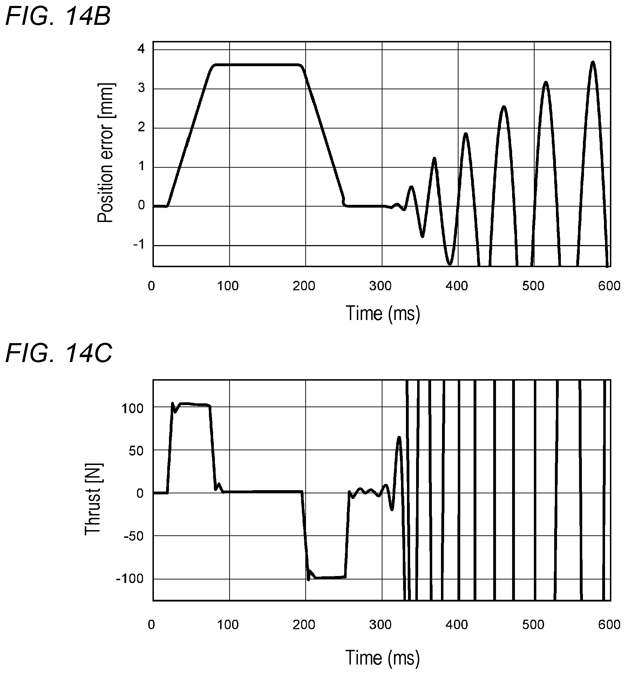

Fig. 14B is a diagram illustrating an error between a position controlled by the control device according to the second comparative example and a command position in the second simulation example. The error oscillates before the step disturbance is applied after the command position r becomes constant at 100 [mm], and the amplitude of the oscillation gradually expands and diverges.

Fig. 14C is a diagram illustrating a thrust controlled by the control device according to the second comparative example in the second simulation example. Although the thrust is generated with the reverse sign in a period in which the positive acceleration occurs and a period in which the negative acceleration occurs, the thrust vibrates after 250 [ms], and it can be read that the control is not appropriately performed.

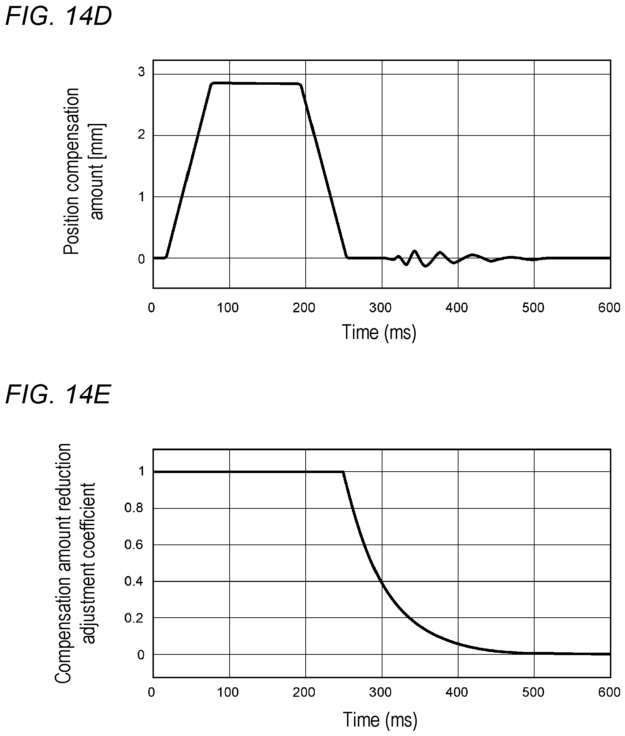

Fig. 14D is a diagram illustrating a position compensation amount calculated by the control device according to the second comparative example in the second simulation example. The position compensation amount gradually converges to 0 while oscillating after 250 [ms] when the command position r becomes constant at 100 [mm].

Fig. 14E is a diagram illustrating a position compensation amount reduction adjustment coefficient used by the control device according to the second comparative example in the second simulation example. The position compensation amount reduction adjustment coefficient changes from 1 to 0 at 250 [ms] where the command position r is constant at 100 [mm]. The position compensation amount reduction adjustment coefficient is a coefficient multiplied by the entire position compensation amount, and the decrease in the position compensation amount illustrated in Fig. 14D is realized along with the decrease in the position compensation amount reduction adjustment coefficient. However, as is clear from Figs. 14A, 14B, and 14C, when there is a relatively long dead time and disturbance, it is not possible to perform appropriate control even using such a position compensation amount reduction adjustment coefficient.

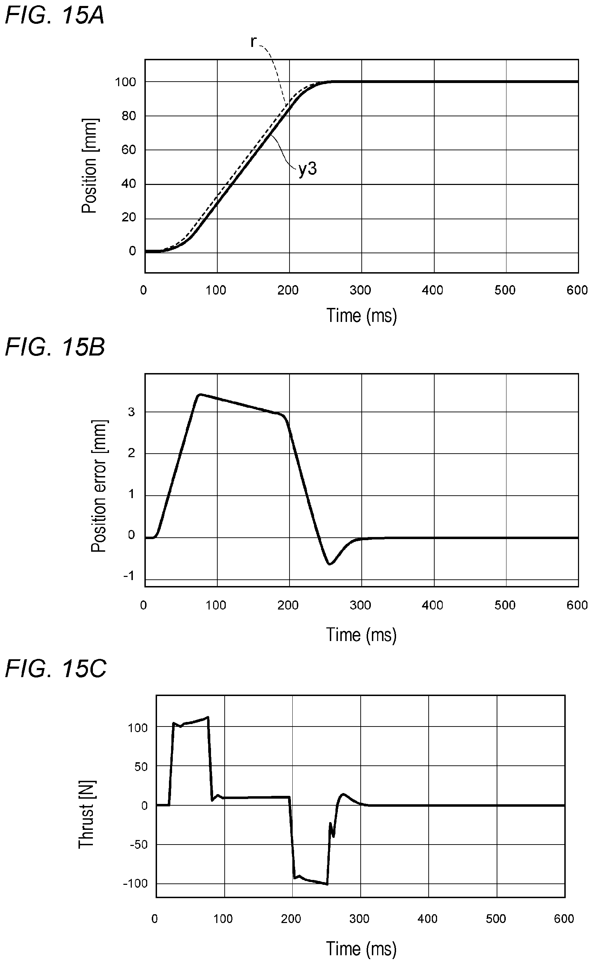

Fig. 15A is a diagram illustrating a position y3 of a target device controlled by the control device 10 according to the embodiment in a third simulation example. In the present simulation example, the command position is the same as that in the first simulation example, and monotonically increases from the origin to 100 [mm] from the time 10 [ms] to 250 [ms]. The maximum acceleration during the movement is 10,000 [mm/s²]. In the present simulation example, no disturbance is applied.

In the present simulation example, unlike the first simulation example, a viscous friction coefficient C should be 0 [Ns/m], but a viscous friction coefficient model value Cm is set to 40 [Ns/m]. That is, the present simulation example includes a modeling error for the viscous friction coefficient. Other conditions of this simulation example are as follows. An inertia mass J is 10 kg, a control period Ts is 0.25 [ms], and the dead time period number D is 20.

In Fig. 15A, the position y3 of the target device 20 controlled by the control device 10 according to the embodiment is indicated by a solid line, and a command position r is indicated by a broken line. The position y3 of the target device 20 controlled by the control device 10 according to the embodiment accurately follows the change in the command position r, and converges to the target value without offset after the command position r becomes constant at the target value of 100 [mm].

Fig. 15B is a diagram illustrating an error between a position controlled by the control device 10 according to the embodiment and a command position in the third simulation example. The drawing illustrates a difference between r and y3 illustrated in Fig. 15A. The error increases to about 3 [mm] while the command position changes, but rapidly converges to 0 after the command position reaches the target value and becomes constant. As described above, also from the drawing, it is confirmed that the position of the target device 20 controlled by the control device 10 according to the embodiment converges to the target value without offset.

Fig. 15C is a diagram illustrating a thrust controlled by the control device 10 according to the embodiment in the third simulation example. The thrust is a control signal transmitted from the control device 10 to the target device 20. The thrust is generated with opposite signs in a period in which positive acceleration occurs and a period in which negative acceleration occurs.

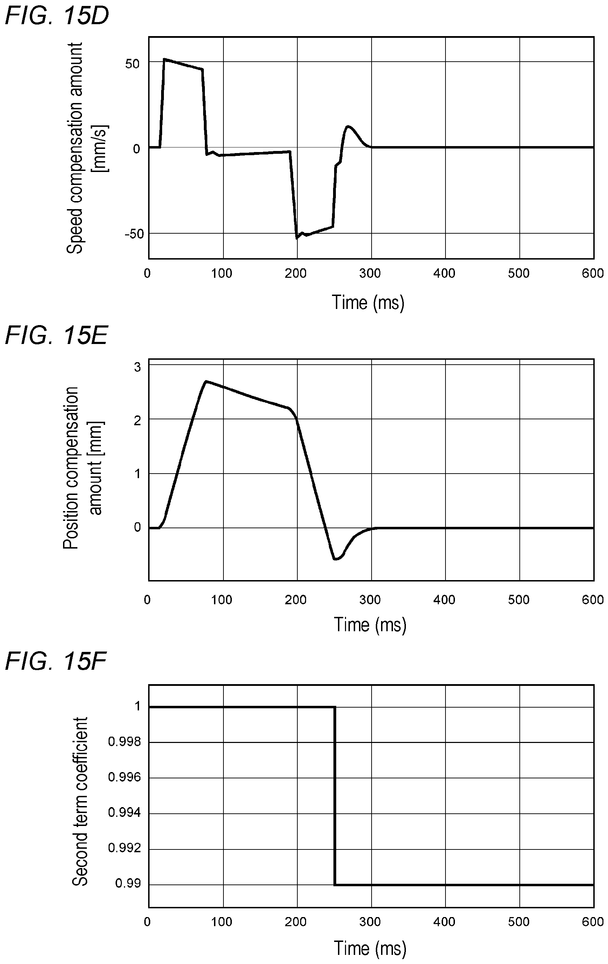

Fig. 15D is a diagram illustrating a speed compensation amount calculated by the control device 10 according to the embodiment in the third simulation example. The speed compensation amount changes in the same manner as the thrust illustrated in Fig. 15C, but converges to 0 after the coefficient of the second term of the speed compensation amount described later changes from 1 to 0.99.

Fig. 15E is a diagram illustrating a position compensation amount calculated by the control device 10 according to the embodiment in the third simulation example. The position compensation amount shifts similarly to the error illustrated in Fig. 15B, but converges to 0 after the coefficient of the second term of the position compensation amount described later changes from 1 to 0.99.

Fig. 15F is a diagram illustrating a coefficient of the second term of the compensation amount used by the control device 10 according to the embodiment in the third simulation example. The coefficient of the second term illustrated in the drawing is used for both the speed compensation amount and the position compensation amount. The coefficient of the second term of the compensation amount changes from 1 to 0.99 at the timing of 250 [ms] when the command position becomes 100 [mm] that is the target value and the absolute value of the position compensation amount is 0.2 [mm] or more. After the coefficient of the second term changes to 0.99, the second term of the speed compensation amount and the position compensation amount rapidly converges to 0. Furthermore, since the first terms of the speed compensation amount and the position compensation amount are proportional to a difference between the thrust of the current cycle and the thrust before the dead time cycle, the first term converges to 0 after the thrust becomes constant. In this way, the speed compensation amount and the position compensation amount become 0 after the command position becomes constant.

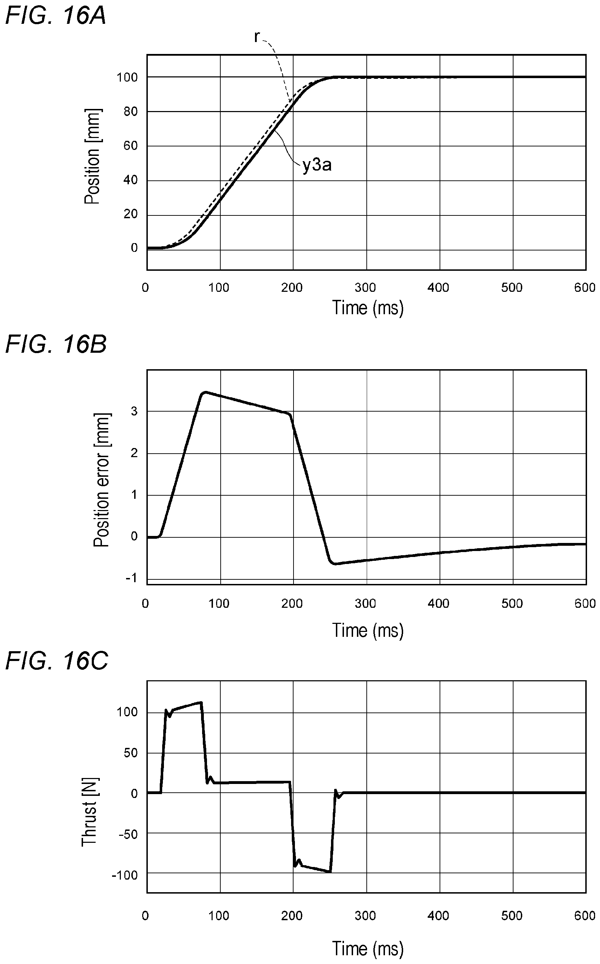

Fig. 16A is a diagram illustrating a position of a target device controlled by the control device according to the first comparative example in the third simulation example. The control device according to the first comparative example is an example of controlling the position of the target device 20 using PID control and a conventional Smith compensator. In the drawing, a position y3a of the target device 20 controlled by the control device according to the first comparative example is indicated by a solid line, and a command position r is indicated by a broken line. The position y3a of the target device 20 controlled by the control device according to the first comparative example converges to the same position after 250 [ms] when the command position r becomes constant at 100 [mm] which is the target value, but the time until convergence is longer than that in the case of the control device 10 according to the embodiment.

Fig. 16B is a diagram illustrating an error between a position controlled by the control device according to the first comparative example and a command position in the third simulation example. The error asymptotically approaches 0 slowly after 250 [ms] when the command position r becomes constant at 100 [mm], but convergence is slower than in the case of the control device 10 according to the embodiment.

Fig. 16C is a diagram illustrating a thrust controlled by the control device according to the first comparative example in the third simulation example. The thrust is generated with opposite signs in a period in which positive acceleration occurs and a period in which negative acceleration occurs.

As described above, when the control device according to the first comparative example is used, convergence to the target position becomes slow due to the influence of the modeling error. In this regard, the control device 10 according to the embodiment converges to the target position relatively quickly even if the modeling error is included.

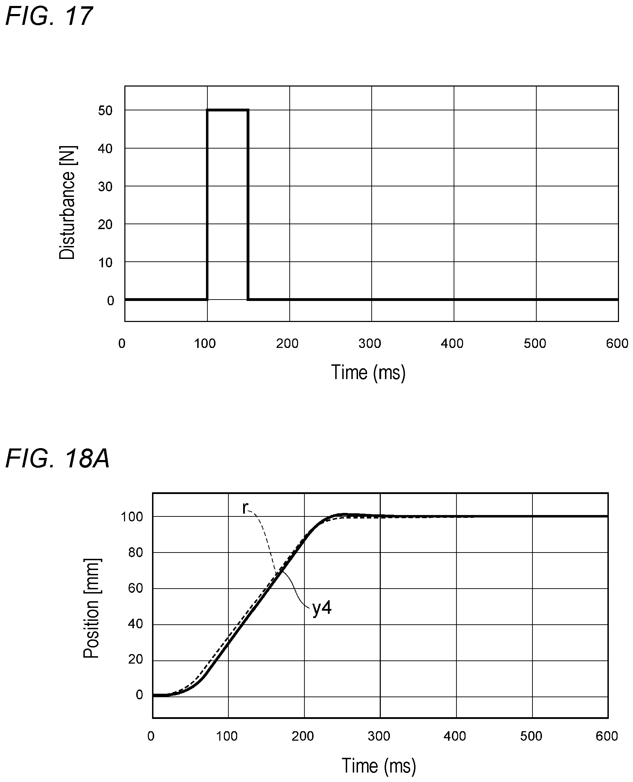

Fig. 17 is a diagram illustrating a disturbance of a fourth simulation example. In the present simulation example, the disturbance is applied +50 [N] in a pulse shape at the time 100 [ms]. The command position in the present simulation example is the same as that in the first simulation example. That is, in the present simulation example, the command position monotonically increases from the origin to 100 [mm] from the time 10 [ms] to 250 [ms]. The maximum acceleration during the movement is 10,000 [mm/s²].

Other conditions of the fourth simulation example are as follows. An inertia mass J is 10 kg, a viscous friction coefficient C is 0 [Ns/m], a control period Ts is 0.25 [ms], and the dead time period number D is 20. It is assumed that no modeling error occurs in the present simulation example.

Fig. 18A is a diagram illustrating a position y4 of a target device controlled by the control device 10 according to the embodiment in the fourth simulation example. In the drawing, the position y4 of the target device 20 controlled by the control device 10 according to the embodiment is indicated by a solid line, and a command position r is indicated by a broken line. The position y4 of the target device 20 controlled by the control device 10 according to the embodiment converges to the target value without offset after the command position r becomes constant at the target value of 100 [mm].

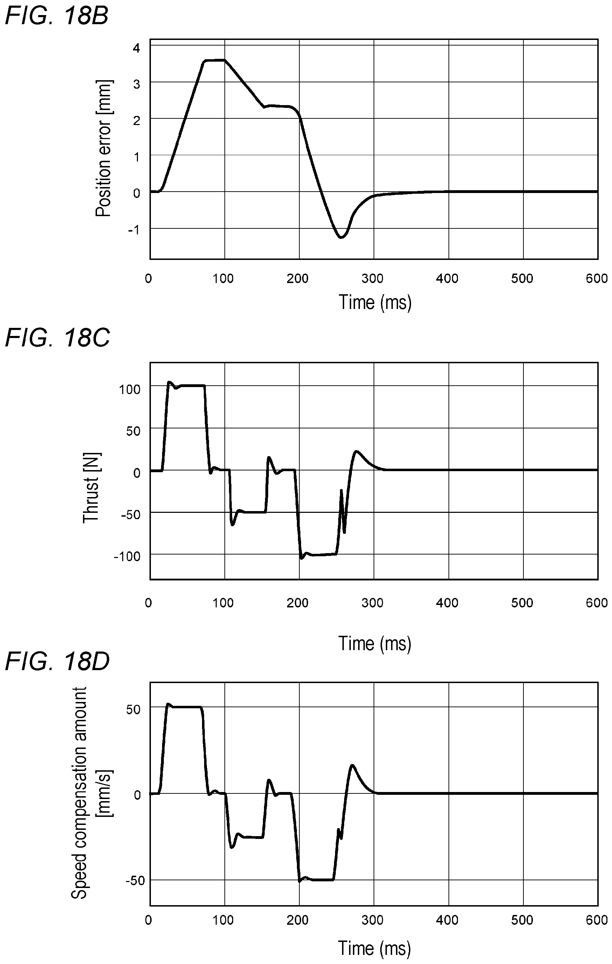

Fig. 18B is a diagram illustrating an error between a position controlled by the control device 10 according to the embodiment and a command position in the fourth simulation example. The drawing illustrates a difference between r and y4 illustrated in Fig. 18A. The error is about -1.3 [mm] when the command value reaches the target value due to the influence of the pulse disturbance, and then converges to 0. As described above, also from the drawing, it is confirmed that the position of the target device 20 controlled by the control device 10 according to the embodiment converges to the target value without offset.

Fig. 18C is a diagram illustrating a thrust controlled by the control device 10 according to the embodiment in the fourth simulation example. The thrust is a control signal transmitted from the control device 10 to the target device 20. A thrust of -50 [N] is generated at the time 100 [ms] so as to cancel the pulse disturbance of +50 [N] in addition to the thrust generated with the reverse sign in a period in which the positive acceleration occurs and a period in which the negative acceleration occurs.

Fig. 18D is a diagram illustrating a speed compensation amount calculated by the control device 10 according to the embodiment in the fourth simulation example. The speed compensation amount changes in the same manner as the thrust illustrated in Fig. 18C, but converges to 0 after the coefficient of the second term of the speed compensation amount described later changes from 1 to 0.99.

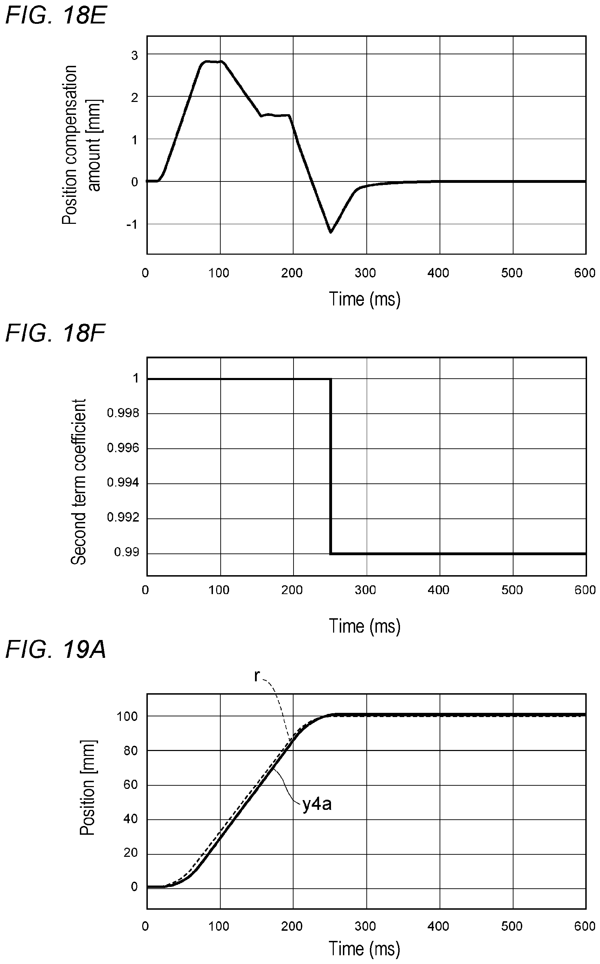

Fig. 18E is a diagram illustrating a position compensation amount calculated by the control device 10 according to the embodiment in the fourth simulation example. The position compensation amount shifts similarly to the error illustrated in Fig. 18B, but converges to 0 after the coefficient of the second term of the position compensation amount described later changes from 1 to 0.99.

Fig. 18F is a diagram illustrating a coefficient of the second term of the compensation amount used by the control device 10 according to the embodiment in the fourth simulation example. The coefficient of the second term illustrated in the drawing is used for both the speed compensation amount and the position compensation amount. The coefficient of the second term of the compensation amount changes from 1 to 0.99 at the timing of 250 [ms] when the command position becomes 100 [mm] that is the target value and the absolute value of the position compensation amount is about 0.2 [mm] or more. After the coefficient of the second term changes to 0.99, the second term of the speed compensation amount and the position compensation amount rapidly converges to 0. Furthermore, since the first terms of the speed compensation amount and the position compensation amount are proportional to a difference between the thrust of the current cycle and the thrust before the dead time cycle, the first term converges to 0 after the thrust becomes constant. In this way, the speed compensation amount and the position compensation amount become 0 after the command position becomes constant.

Fig. 19A is a diagram illustrating a position of a target device controlled by the control device according to the first comparative example in the fourth simulation example. The control device according to the first comparative example is an example of controlling the position of the target device 20 using PID control and a conventional Smith compensator. In the drawing, a position y4a of the target device 20 controlled by the control device according to the first comparative example is indicated by a solid line, and a command position r is indicated by a broken line. The position y4a of the target device 20 controlled by the control device according to the first comparative example remains with an error after 250 [ms] when the command position r becomes constant at 100 [mm] which is the target value, and does not converge to the same position as the target value.

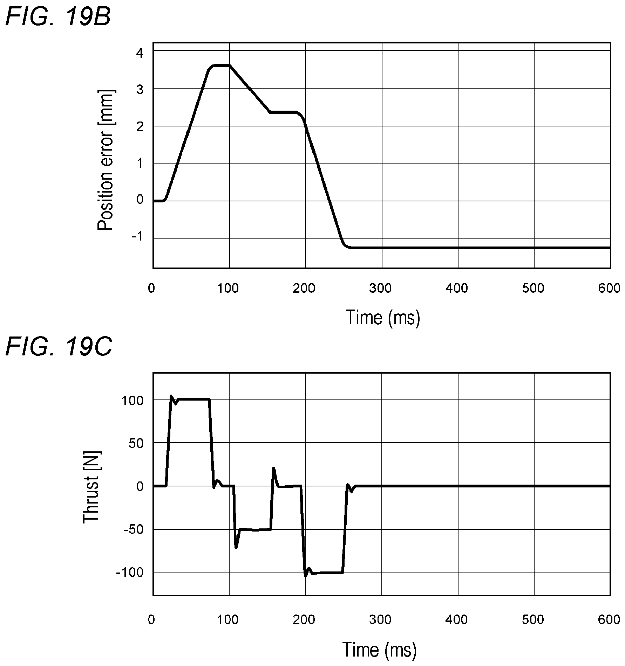

Fig. 19B is a diagram illustrating an error between a position controlled by the control device according to the first comparative example and a command position in the fourth simulation example. The error does not become 0 even after 250 [ms] when the command position r becomes constant at 100 [mm], and a constant value remains.

Fig. 19C is a diagram illustrating a thrust controlled by the control device according to the first comparative example in the fourth simulation example. A thrust of -50 [N] is generated at the time 100 [ms] so as to cancel the pulse disturbance of +50 [N] in addition to the thrust generated with the reverse sign in a period in which the positive acceleration occurs and a period in which the negative acceleration occurs.

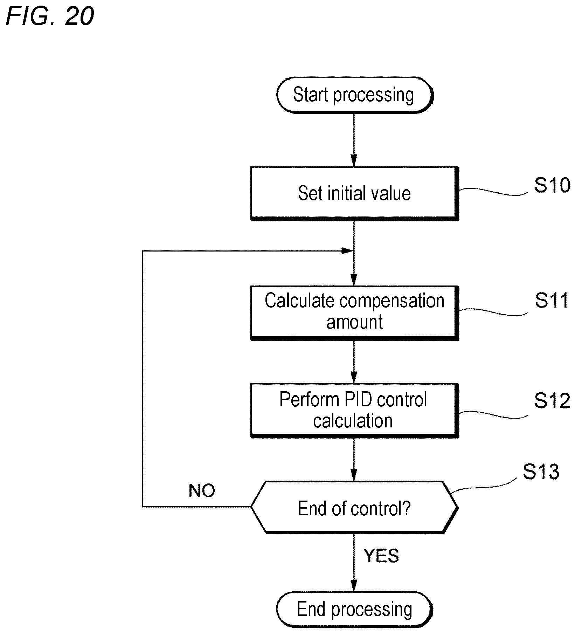

Fig. 20 is a flowchart of control processing executed by the control device 10 according to the embodiment. First, the control device 10 sets an initial value (S10). The setting of the initial value may include, for example, setting a model value of the target device 20, initializing the thrust as the control signal to 0, setting the coefficient of the second term to 1, setting the value after the change of the coefficient of the second term to 0.99, and setting the first reference value AdjChg to 0.2.

Thereafter, the control device 10 starts control loop processing. The control loop is repeatedly executed at a predetermined control cycle. Here, the control cycle may be, for example, 0.25 [ms].

In the control loop, the control device 10 calculates the compensation amount (S11). The compensation amount calculation may include determination as to whether or not the command value reaches the target value and the absolute value of the compensation amount is greater than or equal to the first reference value. In a case where the command value does not reach the target value or the absolute value of the compensation amount is not greater than or equal to the first reference value, the control device 10 calculates the speed compensation amount and the position compensation amount while keeping the coefficient of the second term at the initial value (keeping 1). The method of calculating the speed compensation amount and the position compensation amount is as described above. On the other hand, in a case where the command value reaches the target value and the absolute value of the compensation amount is greater than or equal to the first reference value, the control device 10 changes the coefficient of the second term to less than the initial value (for example, to 0.99) to calculate the speed compensation amount and the position compensation amount.

In a case where the coefficient of the second term is changed to be less than the initial value, the control device 10 maintains the coefficient of the second term to be less than the initial value as long as the command value reaches the target value. However, in a case where the command value starts to move again and the command value deviates from the target value, the control device 10 may return the coefficient of the second term to the initial value.

Thereafter, the control device 10 performs the PID control calculation based on the command position, the position of the target device 20 measured by the sensor 30, and the calculated speed compensation amount and position compensation amount (S12). A thrust that is a control signal is calculated by the PID control calculation. The control device 10 controls the target device 20 based on the calculated thrust.

The control device 10 determines whether or not to end the control loop processing and end the control (S13). In a case where the control is continued (S13: NO), the compensation amount calculation (S11) and the PID control calculation (S12) are executed again. In a case where the control is ended (S13: YES), the processing exits the control loop and ends.

The embodiment described above is intended to facilitate understanding of the present invention, and are not intended to limit the present invention. Each element included in the embodiment and the arrangement, material, condition, shape, size, and the like thereof are not limited to those exemplified, and can be appropriately changed. Furthermore, it is possible to partially replace or combine the configurations shown in different embodiments.

### [Appendix 1]

A control system (100) including:
a target device (20) configured to be controlled based on a control signal;
a sensor (30) configured to measure a physical quantity of the target device (20);
a control device (10) configured to send the control signal to the target device (20) based on a command value and the physical quantity to perform feedback control,
   in which
the control device (10) includes a calculator (14) configured to calculate a compensation amount of the control signal on the basis of a set value of dead time and a model of the target device (20),
the calculator (14)
   calculates the compensation amount including a first term based on the control signal and a second term based on the compensation amount calculated in a past, and
   changes a coefficient of the second term from a predetermined value to less than the predetermined value when a predetermined condition is satisfied.

### [Appendix 2]

A control device (10) configured to send a control signal to a target device (20) based on a physical quantity of the target device (20) measured by a sensor (30) and a command value to perform feedback control, the control device (10) including:
a calculator (14) configured to calculate a compensation amount of the control signal based on a set value of dead time and a model of the target device (20),
   in which the calculator (14)
calculates the compensation amount including a first term based on the control signal and a second term based on the compensation amount calculated in a past, and
changes a coefficient of the second term from a predetermined value to less than the predetermined value when a predetermined condition is satisfied.

### [Appendix 3]

A control method for performing feedback control by sending a control signal to a target device (20) based on a physical quantity of the target device (20) measured by a sensor (30) and a command value, the control method including:
calculating a compensation amount of the control signal based on a set value of dead time and a model of the target device (20), the compensation amount including a first term based on the control signal and a second term based on the compensation amount calculated in a past; and
changing a coefficient of the second term from a predetermined value to less than the predetermined value when a predetermined condition is satisfied.

### [Appendix 4]

A control program that causes a control device (10) configured to perform feedback control by sending a control signal to a target device (20) based on a physical quantity of the target device (20) measured by a sensor (30) and a command value to execute:
calculating a compensation amount of the control signal based on a set value of dead time and a model of the target device (20), the compensation amount including a first term based on the control signal and a second term based on the compensation amount calculated in a past; and
changing a coefficient of the second term from a predetermined value to less than the predetermined value when a predetermined condition is satisfied.

### DESCRIPTION OF SYMBOLS

- 10: control device
- 10a: CPU
- 10b: RAM
- 10c: ROM
- 10d: communication unit
- 10e: input unit
- 10f: display unit
- 11: command value generator
- 12: control signal generator
- 13: acquisition unit
- 14: calculator
- 20: target device
- 30: sensor
- 100: control system

## Claims

1. A control system (100) comprising:
a target device (20) configured to be controlled based on a control signal;
a sensor (30) configured to measure a physical quantity of the target device (20); and
a control device (10) configured to send the control signal to the target device (20) based on a command value and the physical quantity to perform feedback control,
wherein
the control device (10) includes a calculator (14) configured to calculate a compensation amount of the control signal based on a set value of dead time and a model of the target device (20), and
the calculator (14)
calculates the compensation amount including a first term based on the control signal and a second term based on the compensation amount calculated in a past, and
changes a coefficient of the second term from a predetermined value to less than the predetermined value when a predetermined condition is satisfied.

2. The control system (100) according to claim 1, wherein the calculator (14) changes the coefficient of the second term from the predetermined value to less than the predetermined value when the command value reaches a target value.

3. The control system (100) according to claim 1, wherein the calculator (14) changes the coefficient of the second term from the predetermined value to less than the predetermined value when the command value reaches a target value and an absolute value of the compensation amount is greater than or equal to a first reference value.

4. The control system (100) according to claim 1, wherein the calculator (14) changes the coefficient of the second term from a value less than the predetermined value to the predetermined value when a target value is updated after changing the coefficient of the second term from the predetermined value to less than the predetermined value.

5. The control system (100) according to claim 1, wherein the calculator (14) changes the coefficient of the second term from the predetermined value to less than the predetermined value when an absolute value of a difference between the command value and the target value becomes less than or equal to a second reference value.

6. The control system (100) according to claim 1, wherein the calculator (14) changes the coefficient of the second term from the predetermined value to less than the predetermined value when an elapsed time from start of control becomes greater than or equal to a third reference value.

7. The control system (100) according to claim 1, wherein the calculator (14) changes the coefficient of the second term from the predetermined value to less than the predetermined value when a disturbance is applied.

8. The control system (100) according to any one of claims 1 to 7, wherein
the control device (10) controls a position of the target device (20), and
the calculator (14)
calculates the compensation amount for each of the position and a speed, and
changes the coefficient of the second term related to each of the position and the speed from the predetermined value to less than the predetermined value when the predetermined condition is satisfied.

9. A control device (10) configured to send a control signal to a target device (20) based on a physical quantity of the target device (20) measured by a sensor (30) and a command value to perform feedback control, the control device (10) comprising a calculator (14) configured to calculate a compensation amount of the control signal based on a set value of dead time and a model of the target device (20),
wherein the calculator (14)
calculates the compensation amount including a first term based on the control signal and a second term based on the compensation amount calculated in a past, and
changes a coefficient of the second term from a predetermined value to less than the predetermined value when a predetermined condition is satisfied.

10. A control method for performing feedback control by sending a control signal to a target device (20) based on a physical quantity of the target device (20) measured by a sensor (30) and a command value, the control method comprising:
calculating a compensation amount of the control signal based on a set value of dead time and a model of the target device (20), the compensation amount including a first term based on the control signal and a second term based on the compensation amount calculated in a past; and
changing a coefficient of the second term from a predetermined value to less than the predetermined value when a predetermined condition is satisfied.

11. A control program that causes a control device (10) configured to perform feedback control by sending a control signal to a target device (20) based on a physical quantity of the target device (20) measured by a sensor (30) and a command value to execute:
calculating a compensation amount of the control signal based on a set value of dead time and a model of the target device (20), the compensation amount including a first term based on the control signal and a second term based on the compensation amount calculated in a past; and
changing a coefficient of the second term from a predetermined value to less than the predetermined value when a predetermined condition is satisfied.
